(19) Europäisches Patentamt / European Patent Office / Office européen des brevets

(11) EP 4 570 974 A1

(12) EUROPEAN PATENT APPLICATION
published in accordance with Art. 153(4) EPC

(43) Date of publication:
**18.06.2025 Bulletin 2025/25**

(21) Application number: **23882405.6**

(22) Date of filing: **10.10.2023**

(51) International Patent Classification (IPC):
***D01F 9/22*** *(2006.01)* ***B29B 15/14*** *(2006.01)*
***D06M 15/55*** *(2006.01)* ***D06M 101/40*** *(2006.01)*

(52) Cooperative Patent Classification (CPC):
**B29B 15/14; D01F 9/22; D06M 15/55**

(86) International application number:
**PCT/JP2023/036704**

(87) International publication number:
**WO 2024/090196 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.10.2022 JP 2022169747**
**29.03.2023 JP 2023053086**

(71) Applicant: **Toray Industries, Inc.**
**Tokyo 103-8666 (JP)**

(72) Inventors:
- **MATSUMOTO, Masahiro**
  **Iyo-gun, Ehime 791-3193 (JP)**
- **WATANABE, Jun**
  **Iyo-gun, Ehime 791-3193 (JP)**
- **TANAKA, Fumihiko**
  **Iyo-gun, Ehime 791-3193 (JP)**

(74) Representative: **Prüfer & Partner mbB**
**Patentanwälte · Rechtsanwälte**
**Sohnckestraße 12**
**81479 München (DE)**

# (54) CARBON FIBER BUNDLE, AND CARBON FIBER-REINFORCED COMPOSITE MATERIAL USING SAME

(57) A problem to be addressed by the present invention is to provide a carbon fiber bundle capable of efficiently transiting the tensile strength of the fiber to a carbon fiber-reinforced composite material formed using the carbon fiber bundle, the carbon fiber bundle including a sizing agent added thereto, wherein the tensile strength of resin-impregnated strands (tensile strength A' of resin-impregnated strands) of the carbon fiber bundle is 5.0 GPa or more and 6.0 GPa or less, as evaluated on the basis of JIS R7608 (2007) using Resin Formulation A below; wherein the tensile strength of resin-impregnated strands (tensile strength B' of resin-impregnated strands) of the carbon fiber bundle is 4.7 GPa or more and 5.5 GPa or less, as evaluated on the basis of JIS R7608 (2007) using Resin Formulation B below; wherein the ratio of the tensile strength B' of resin-impregnated strands to the tensile strength A' of resin-impregnated strands is 85% or more; and wherein the single-fiber diameter of the carbon fiber bundle is 6.0 μm or more; Resin Formulation A: "CELLOXIDE (registered trademark)" 2021P, boron trifluoride monoethyl amine, and acetone are used at a ratio of 100:3:4 (parts by mass), and the curing conditions of a normal pressure, a temperature of 125°C, and a time of 30 minutes are used; and Resin Formulation B: "JER (registered trademark)" 828, dicyandiamide, and 3-(3,4-dichlorophenyl)-1,1-dimethylurea are used at a ratio of 100:6.3:2 (parts by mass), and the curing conditions of a normal pressure, a temperature of 130°C, and a time of 90 minutes are used.

EP 4 570 974 A1

## Description

Technical Field

The present invention relates to a carbon fiber bundle to be suitably used for sports applications, such as golf club shafts and fishing rods, and other general industrial applications, such as aircraft parts and materials, automobile parts and materials, and ship parts and materials.

Background Art

A polyacrylonitrile-based carbon fiber (polyacrylonitrile is hereinafter abbreviated as "PAN" in some cases) has a higher specific strength and higher specific tensile modulus than other fibers, and thus, is widely used as a reinforcing fiber for a composite material in general industrial applications, such as automobiles, civil engineering/construction, pressure vessels, and wind blades in addition to conventional sports applications and aerospace applications. Thus, a polyacrylonitrile-based carbon fiber is strongly demanded to have higher performance further.

In addition to simple enhancement of the tensile strength of resin-impregnated strands of a carbon fiber itself, one approach for enhancing the tensile strength of a carbon fiber-reinforced composite material (hereinafter simply referred to as a "carbon fiber-reinforced composite" in some cases) is, for example, an improvement in how efficiently the mechanical properties of a carbon fiber can be transited or utilized in a case where the carbon fiber is formed as a reinforcing fiber for a composite material (that is, the improvement is in a strength transition rate).

Some suggestions have hitherto been made for the purpose of enhancing the strength transition rate. Patent Literature 1 and 2 discloses a technology in which the surface layer of a carbon fiber bundle obtained from a precursor fiber bundle having denseness enhanced through dry-jet wet spinning is electrolytically oxidized in an aqueous electrolyte solution containing a nitrate ion as an essential component. In addition, Patent Literature 3 discloses a technology in which enhancing the tensile strength of resin-impregnated strands and the yarn break critical tension results in prevention of fuzzing and yarn break during molding by filament winding, and results in good transition of the tensile strength to the resulting cylinder obtained. In Patent Literature 4, the impact resistance, tensile strength, and compression strength of a carbon fiber-reinforced composite are enhanced by adjusting the rigidity modulus in the rubber plateau at a point not lower than the glass transition point. In Patent Literature 5, the interlaminar toughness of a carbon fiber-reinforced composite and the compression strength of the composite under a high-temperature environment are enhanced by adjusting the rigidity modulus in the rubber plateau at a point not lower than the glass transition point. In Patent Literature 6, the compression strength of a carbon fiber-reinforced composite is enhanced by adjusting the compressive yield stress of a cured resin. Patent Literature 7 and 10 discloses that the moldability during the formation of a carbon fiber-reinforced composite is improved by preventing the bundle splitting, or enhancing the fiber spreadability of a carbon fiber bundle and the impregnating property of a resin during the molding of a carbon fiber-reinforced composite, and that the transition of the strength is enhanced by eliminating the nonimpregnated portion and excessive portion of the resin. Patent Literature 7 discloses a technology in which the abrasion resistance, yarn break property, and resin impregnating property are all satisfied by attaching a sizing agent to the inner layer portion of a carbon fiber bundle, and then spraying the carbon fiber bundle with gas to remove the sizing agent from the outer layer portion of the bundle. Patent Literature 8 discloses a technology in which the moldability during the formation of a composite material is enhanced by entangling a precursor fiber bundle for carbon fiber, and thus making the bundle less prone to bundle splitting when the bundle is spread in order to be formed into the composite material. Patent Literature 9 discloses a technology in which the impregnating property of a resin is enhanced by decreasing the fiber diameter of each of the single fibers constituting a carbon fiber bundle, and by forming, in the surface of the single fiber, fiber-axis-direction grooves having a specific depth. In addition, Patent Literature 10 discloses a technology in which a homogeneous molded product is produced by forming a carbon fiber bundle in oblate form to enhance the fiber spreadability during molding. In Patent Literature 11, the transition of the 0° tensile strength of a carbon fiber-reinforced composite is facilitated by controlling the crystal structure of the carbon fiber in a preferable state under the carbonization conditions of a stabilization/carbonization process. In addition, Patent Literature 12 discloses a technology for inhibiting a decrease in the mechanical properties between a carbon fiber bundle processed in prepreg form and the bundle processed into a final molded article, in which technology the surplus epoxy groups contained in the sizing agent are hydrolyzed before and/or after the sizing agent is added to the carbon fiber bundle.

Citation List

Patent Literature

Patent Document 1: JP H05-004463 B
Patent Document 2: JP H04-009227 B
Patent Literature 3: JP 3047731 B
Patent Document 4: JP 2001-323046 A
Patent Literature 5: WO 2016/67736
Patent Document 6: JP 2003-277471 A
Patent Literature 7: JP 6543309 B
Patent Document 8: JP 2020-059937 A
Patent Literature 9: JP 4533518 B
Patent Document 10: JP 2002-294568 A
Patent Literature 11: JP 7239401 B
Patent Literature 12: JP 6051987 B

Summary of Invention

Technical Problem

The technologies according to Patent Literature 1 and 2 enhance the tensile strength of resin-impregnated strands of any of two kinds of resins before and after a nitric acid treatment, but need the nitric acid treatment, drying, and inerting under a nitrogen atmosphere at 700°C for several minutes as post-treatments for the carbon fiber having a thin single fiber fineness, and thus, have a quality decrease problem due to fuzzing, and productivity and cost problems due to the accompanying post-treatments. In the technology according to Patent Literature 3, the same resin as in the evaluation of the strands is used in the measurement of the tensile strength of a cylinder molded through filament winding. Thus, the technology can evaluate whether there is a strength decrease due to yarn damage in a molding process in the filament winding, but the technology is insufficient in improvement made in the strength transition rate, and arising from a difference in the resin. In Patent Literature 4 to 6, the mechanical properties of a cured epoxy resin are designed to maximally transit the mechanical properties of an existing kind of carbon fiber, but are limited to a resin having a specific composition, and thus, such a technology is not applicable to carbon fiber-reinforced composites in a wide range of applications. The technologies according to Patent Literature 7 and 10 are technologies for enhancing the moldability of a carbon fiber bundle, and are not expected to enhance the mechanical properties in a case where good moldability is already established. In Patent Literature 8 and 9, the diameter of a single fiber constituting a carbon fiber bundle is small, thus causing a problem with the productivity of a carbon fiber bundle itself and a problem of a quality decrease due to fuzzing during processing. Patent Literature 10 describes a technology in which a base compound or a curing agent in the resin-impregnated-strand strength test method described in JIS R7608 (2007) is used as a matrix resin for forming a carbon fiber-reinforced composite, and a strength decrease is inhibited when a test piece is formed in cylindrical shape. In addition, according to the technology in Patent Literature 11, the 0° tensile strength of a carbon fiber-reinforced composite is high with respect to the tensile strength of resin-impregnated strands of a carbon fiber bundle, but the technology has not successfully given sufficient strength in the form of an absolute value of the strength. The technology according to Patent Literature 12 is that which inhibits a strength decrease caused after processing into a prepreg form and before processing into a final molded article, and is not that which enhances the strength.

In addition, the evaluating method in accordance with the resin composition and technique based on JIS R7608 (2007), as a method of evaluating the tensile strength of resin-impregnated strands, is excellent in that a test piece can be produced simply, and that stable test results are obtained. However, the method is often as follows: compared with a practical resin used for a carbon fiber-reinforced composite, the number of functional groups is small, and adhesion with a carbon fiber bundle is low. Accordingly, in some cases, there is a discrepancy between the tensile strength of resin-impregnated strands, as specified in JIS R7608 (2007), and the 0° tensile strength of a carbon fiber-reinforced composite produced using a practical resin.

To the pressure resistance of a pressure vessel, the 0° tensile strength of a carbon fiber-reinforced composite is dominant, and thus, the discrepancy between the tensile strength of resin-impregnated strands, as specified in JIS R7608 (2007), and the 0° tensile strength of a carbon fiber-reinforced composite produced using a practical resin poses a problem in the designing of a pressure vessel. In particular, a carbon fiber bundle having a single-fiber diameter of 6.6 μm or more, and commonly used as a carbon fiber bundle for a pressure vessel exhibits a discrepancy between the tensile strength of resin-impregnated strands, as evaluated in accordance with JIS R7608 (2007), and the pressure-resistant performance of a pressure vessel in a pressure test.

On the other hand, even if a resin composition specified in JIS R7608 (2007) is simply changed to a practical resin, but, for example, in a case where the original viscosity of the resin is high, or in a case where the reactivity of the resin is high, and makes it more likely to increase the viscosity of the resin during impregnation, there is a problem in that the carbon fiber bundle is insufficiently impregnated with the resin, thus causing the dispersion of the evaluation results to be

large, and making it infeasible to make a suitable evaluation.

In view of this, an object of the present invention is to provide a carbon fiber bundle that can transit tensile strength to the resulting carbon fiber-reinforced composite efficiently. This is achieved by: discovering an evaluating technique to be performed using a resin composition reflecting the transition of the strength to the resulting carbon fiber-reinforced composite; and optimally designing one or both of a method of manufacturing the carbon fiber bundle and the interface adhesion property between the carbon fiber bundle and the resin.

Solutions to Problem

To solve the above-described object, the present invention has the following constituents.

(1) A carbon fiber bundle including a sizing agent added thereto,

wherein the tensile strength of resin-impregnated strands (tensile strength A' of resin-impregnated strands) of the carbon fiber bundle is 5.0 GPa or more and 6.0 GPa or less, as evaluated on the basis of JIS R7608 (2007) using Resin Formulation A below;
wherein the tensile strength of resin-impregnated strands (tensile strength B' of resin-impregnated strands) of the carbon fiber bundle is 4.7 GPa or more and 5.5 GPa or less, as evaluated on the basis of JIS R7608 (2007) using Resin Formulation B below;
wherein the ratio of the tensile strength B' of resin-impregnated strands to the tensile strength A' of resin-impregnated strands is 85% or more; and
wherein the single-fiber diameter of the carbon fiber bundle is 6.0 $\mu$m or more;
Resin Formulation A: "CELLOXIDE (registered trademark)" 2021P, boron trifluoride monoethyl amine, and acetone are used at a ratio of 100:3:4 (parts by mass), and the curing conditions of a normal pressure, a temperature of 125°C, and a time of 30 minutes are used; and
Resin Formulation B: "JER (registered trademark)" 828, dicyandiamide, and 3-(3,4-dichlorophenyl)-1,1-dimethylurea are used at a ratio of 100:6.3:2 (parts by mass), and the curing conditions of a normal pressure, a temperature of 130°C, and a time of 90 minutes are used.

(2) The carbon fiber bundle according to (1), wherein the product E $\times$ d/W is 12.6 GPa or more, wherein E represents the tensile modulus of resin-impregnated strands, and d/W represents the ratio of a single-fiber diameter d to a loop diameter W just before loop fracture, as evaluated by a single-fiber loop test.
(3) The carbon fiber bundle according to (1) or (2), comprising a single fiber the surface-area ratio of which is 1.00 to 1.08.
(4) The carbon fiber bundle according to any one of (1) to (3),

wherein the tensile strength of resin-impregnated strands (tensile strength C' of resin-impregnated strands) of the carbon fiber bundle is 4.8 GPa or more and 5.5 GPa or less, as evaluated on the basis of JIS R7608 (2007) using Resin Formulation C below;
wherein the ratio of the tensile strength C' of resin-impregnated strands to the tensile strength A' of resin-impregnated strands is 85% or more;
wherein the single-fiber diameter of the carbon fiber bundle is 6.6 $\mu$m or more; and
wherein the interfacial shear strength of the carbon fiber bundle is 16 MPa or less;
Resin Formulation C: "Araldite (registered trademark)" LY1564 SP CI and "Baxxodur (registered trademark)" EC331 are used at a ratio of 100:35 (parts by mass), the curing conditions of a normal pressure, a temperature of 80°C, and 120 minutes are used, and then, the curing conditions of a normal pressure, a temperature of 110°C, and 240 minutes are used.

(5) The carbon fiber bundle according to (4), wherein the tensile strength C' of resin-impregnated strands is 5.0 GPa or more and 5.5 GPa or less.
(6) The carbon fiber bundle according to (4) or (5),

wherein the sizing agent contains at least one component containing an epoxy group, and
wherein the carbon fiber bundle satisfies the relation of the following Formula 1, wherein the epoxy value of the sizing agent eluted by immersing the carbon fiber bundle in *N,N*-dimethylformamide and ultrasonicating the carbon fiber bundle is X meq./g, and
wherein the ratio of attachment of the sizing added to the carbon fiber bundle is Y mass%;

$$0.10 \text{ meq./g} \leq X \times Y \leq 0.68 \text{ meq./g} \cdots \text{ Formula 1.}$$

(7) The carbon fiber bundle according to any one of (4) to (6), having a drape value of more than 0 cm and 18 cm or less.
(8) The carbon fiber bundle according to (7), having a drape value of 4 cm or more and 10 cm or less.
(9) A carbon fiber-reinforced composite produced using the carbon fiber bundle according to any one of (1) to (8).
(10) A pressure vessel produced using the carbon fiber bundle according to any one of (1) to (8).

Advantageous Effects of Invention

Using a carbon fiber bundle according to the present invention makes it possible to efficiently enhance the tensile strength of a carbon fiber-reinforced composite.

Brief Description of Drawings

[FIG. 1] FIG. 1 is a diagram illustrating a method of preparing a sample to be used for measurement of a drape value.

[FIG. 2] FIG. 2 is a diagram illustrating a method of measuring a drape value.

[FIG. 3] FIG. 3 is a schematic diagram related to a device for performing a pressure test on a pressure vessel.

Description of Embodiments

The tensile strength of resin-impregnated strands of a carbon fiber bundle according to the present invention is 5.0 GPa or more and 6.0 GPa or less, preferably 5.5 GPa or more and 6.0 GPa or less, more preferably 5.7 GPa or more and 6.0 GPa or less, as evaluated in accordance with a tensile test method for resin-impregnated strands described in JIS R7608 (2007), using Resin Formulation A below, which is a combination of resins described in JIS R7608 (2007) (the tensile strength of resin-impregnated strands of this Resin Formulation A is hereinafter referred to as a "tensile strength A' of resin-impregnated strands" in some cases).
Resin Formulation A: "CELLOXIDE (registered trademark)" 2021P, boron trifluoride monoethyl amine, and acetone are used at a ratio of 100:3:4 (parts by mass), and the curing conditions of a normal pressure, a temperature of 125°C, and a time of 30 minutes are used.
The tensile strength A' of resin-impregnated strands is an index that indicates the degree of unlikelihood of fracture of a carbon fiber put under a load, and also is an index that indicates the strength of a carbon fiber bundle itself. In a case where the tensile strength A' of resin-impregnated strands is 5.0 GPa or more, it is easier to enhance the strength of the resulting carbon fiber-reinforced composite. The tensile strength of resin-impregnated strands is preferably higher. In a case where the tensile strength A' of resin-impregnated strands is preferably 5.5 GPa or more, more preferably 5.7 GPa or more, the carbon fiber-reinforced composite is more likely to be extremely excellent for practical use. The tensile strength A' of resin-impregnated strands can be controlled through production in accordance with the below-described method of producing a carbon fiber.
The tensile strength of resin-impregnated strands of a carbon fiber bundle according to the present invention is 4.7 GPa or more and 5.5 GPa or less, preferably 4.9 GPa or more and 5.5 GPa or less, as evaluated in accordance with a tensile test for resin-impregnated strands, as described in JIS R7608 (2007), using Resin Formulation B below (the tensile strength of resin-impregnated strands, based on this Resin Formulation B, is hereinafter referred to as a "tensile strength B' of resin-impregnated strands" in some cases).
Resin Formulation B: "JER (registered trademark)" 828, dicyandiamide, and 3-(3,4-dichlorophenyl)-1,1-dimethylurea are used at a ratio of 100:6.3:2 (parts by mass), and the curing conditions of a normal pressure, a temperature of 130°C, and a time of 90 minutes are used.
Resin Formulation B is a practical resin for filament winding (towpreg) in a dry method, and has a viscosity suitable for preparation of a strand test piece in an impregnation method described in JIS R7608 (2007). Resin Formulation B involves a larger number of functional groups and higher adhesion with a carbon fiber bundle, than Resin Formulation A, which is a combination of resins described in JIS R7608 (2007). Thus, the tensile strength B' of resin-impregnated strands is an index that indicates, as a model, the strength of a carbon fiber-reinforced composite formed with a carbon fiber bundle. In a case where the tensile strength B' of resin-impregnated strands is 4.7 GPa or more, it is easier to enhance the strength of the resulting carbon fiber-reinforced composite actually formed. In addition, in a case where the tensile strength B' of resin-impregnated strands is 4.9 GPa or more, the carbon fiber-reinforced composite is more likely to be extremely

excellent for practical use. The tensile strength B' of resin-impregnated strands can be controlled by one or both of: enhancing the denseness of a precursor fiber bundle for carbon fiber in accordance with the below-described method of producing a carbon fiber; and adjusting an interface adhesion property between the carbon fiber and the resin.

In a carbon fiber bundle according to the present invention, the ratio of the tensile strength B' of resin-impregnated strands to the tensile strength A' of resin-impregnated strands (the tensile strength B' of resin-impregnated strands/the tensile strength A' of resin-impregnated strands, hereinafter referred to as a "strength transition rate $\alpha$" in some cases) is 85% or more, preferably 88% or more. The strength transition rate $\alpha$ is an index of transition of the strength to a carbon fiber-reinforced composite formed with a carbon fiber bundle. Having a strength transition rate $\alpha$ of 85% or more enables the mechanical properties of the carbon fiber to be transited or utilized to the resulting carbon fiber-reinforced composite efficiently. The strength transition rate $\alpha$ is preferably closer to 100%, but is often sufficient at 88% or more for a carbon fiber-reinforced composite.

The single-fiber diameter of a carbon fiber bundle according to the present invention is 6.0 $\mu$m or more, preferably 6.6 $\mu$m or more, more preferably 6.8 $\mu$m or more. A breaking load per single fiber is determined from the tensile strength of resin-impregnated strands and the cross-sectional area of a single fiber, and thus, the single-fiber diameter influences the breaking load per single fiber. In addition, a large single-fiber diameter tends to result in less fuzzing due to abrasion in a process, and thus, influences quality. A carbon fiber having a single-fiber diameter of 6.6 $\mu$m or more makes it more likely that good quality is achieved when the carbon fiber is produced, or used to form a carbon fiber-reinforced composite. On the other hand, too large a single-fiber diameter generates the possibility that reaction is ununiform in a single yarn in a carbonization process. Thus, the single-fiber diameter is sufficient at 6.8 $\mu$m or more, and is preferably 8.0 $\mu$m or less.

A carbon fiber bundle according to the present invention makes it possible that enhancement of the tensile strength of the resulting carbon fiber-reinforced composite and enhancement of the pressure resistance of the resulting pressure vessel are achieved by allowing the above-described ranges to be satisfied by all of the tensile strengths of resin-impregnated strands, strength transition rates $\alpha$, and single-fiber diameters based on Resin Formulation A and Resin Formulation B.

For a carbon fiber bundle according to the present invention, $E \times d/W$ is preferably 12.6 GPa or more, wherein $E \times d/W$ is the product of the tensile modulus of resin-impregnated strands (E; the unit, GPa) and d/W, which is the ratio of a single-fiber diameter (d; the unit, $\mu$m; referred to as a "single-fiber diameter d" for convenience in some cases) to a loop diameter evaluated just before loop fracture by a single-fiber loop test (W; the unit, $\mu$m; referred to as a "loop diameter W evaluated just before loop fracture by a single-fiber loop test" for convenience in some cases). Here, this tensile modulus of resin-impregnated strands (referred to as a "tensile modulus E of resin-impregnated strands" for convenience in some cases) can be determined using Resin Formulation A above in accordance with a method described in the Examples section. This product $E \times d/W$ is not particularly limited to any upper limit, but is desirably higher, and is 14 GPa or less from a practical viewpoint.

A single-fiber loop test is a test method in which a single fiber is deformed into a loop form to examine the relation between a strain applied to the single fiber and fracture behavior, such as a single-fiber fracture or buckling. When a single fiber is deformed into a loop form, a compressive strain is applied to the inner side of the single fiber, and a tensile strain is applied to the outer side. Since compressive buckling occurs before tensile fracture, a single-fiber loop test is conventionally used as a test method for a single-fiber compression strength of a carbon fiber bundle in many cases. However, evaluating a fracture strain makes it possible to evaluate a value that can be referred as the intrinsic bending strength of a carbon fiber bundle. That is, d/W is a value in proportion to the strain. It can be said that the product of this value and the tensile modulus E of resin-impregnated strands is a value corresponding to strength. In some cases, simply increasing the tensile strength of resin-impregnated strands of a carbon fiber bundle does not increase the tensile strength of a composite material, but increasing such $E \times d/W$ can effectively increase the tensile strength of a composite material. The upper limit of such $E \times d/W$ is not particularly limited, and 19.0 GPa is sufficient as the upper limit of $E \times d/W$. In this regard, such a parameter can be controlled by increasing the denseness of a precursor fiber bundle for carbon fiber in accordance with the below-described method of producing a carbon fiber bundle according to the present invention.

The tensile strength of resin-impregnated strands of a carbon fiber bundle containing a sizing agent according to the present invention is preferably 4.8 GPa or more and 5.5 GPa or less, the lower limit is more preferably 5.0 GPa or more, and the lower limit is still more preferably 5.2 GPa or more, as evaluated in accordance with a tensile test for resin-impregnated strands, as described in JIS R7608 (2007), using Resin Formulation C below (the tensile strength of resin-impregnated strands, based on this Resin Formulation C, is hereinafter referred to as a "tensile strength C' of resin-impregnated strands" in some cases).

Resin Formulation C: "Araldite (registered trademark)" LY1564 SP CI and "Baxxodur (registered trademark)" EC331 are used at a ratio of 100:35 (parts by mass), the curing conditions of a normal pressure, a temperature of 80°C, and a time of 120 minutes are used, and then, the curing conditions of a normal pressure, a temperature of 110°C, and a time of 240 minutes are used.

Resin Formulation C is a practical resin for filament winding in a wet method, and has a viscosity suitable for preparation of a strand test piece in an impregnation method described in JIS R7608 (2007). In addition, Resin Formulation

C involves a larger number of functional groups and higher adhesion with a carbon fiber bundle, than Resin Formulation A, which is a combination of resins described in JIS R7608 (2007). Thus, it has been discovered that the tensile strength C' of resin-impregnated strands can be used as an index that indicates, as a model, the strength of a carbon fiber-reinforced composite formed with a carbon fiber bundle.

In a case where the tensile strength C' of resin-impregnated strands is 4.8 GPa or more, it is easier to enhance the strength of the resulting carbon fiber-reinforced composite actually formed. In addition, in a case where the tensile strength C' of resin-impregnated strands is 5.0 GPa or more, the carbon fiber-reinforced composite is more likely to be extremely excellent for practical use. The tensile strength C' of 5.5 GPa is often sufficient.

The tensile strength C' of resin-impregnated strands can be controlled by one or both of: enhancing the denseness of a precursor fiber bundle for carbon fiber in accordance with the below-described method of producing a carbon fiber; and adjusting an interface adhesion property between the carbon fiber and the resin.

With a carbon fiber bundle according to the present invention, the ratio of the tensile strength C' of resin-impregnated strands to the tensile strength A' of resin-impregnated strands (the tensile strength C' of resin-impregnated strands/the tensile strength A' of resin-impregnated strands, hereinafter referred to as a "strength transition rate β" in some cases) is preferably 85% or more, more preferably 88% or more. The strength transition rate β is an index of transition of the strength to a carbon fiber-reinforced composite formed with a carbon fiber bundle. Having a strength transition rate β of 85% or more enables the mechanical properties of the carbon fiber to be transited or utilized to the resulting carbon fiber-reinforced composite efficiently. The strength transition rate β is preferably closer to 100%, but is often sufficient at 88% or more for a carbon fiber-reinforced composite.

The interfacial shear strength of a carbon fiber bundle according to the present invention is preferably 16 MPa or less, more preferably 12 MPa or more and 16 MPa or less. The interfacial shear strength is an index that indicates adhesion with the resin of the resulting carbon fiber-reinforced composite. Low adhesion between the carbon fiber and the resin causes debonding at the interface between the carbon fiber and the resin, leading to fracture of the whole carbon fiber-reinforced composite in some cases. The interfacial shear strength of 12 MPa or more, preferably 14 MPa or more, makes it possible to expect, in practical use, inhibition of debonding at the interface in the resulting carbon fiber-reinforced composite. Too high adhesion between the carbon fiber and the resin more easily generates a stress concentration at a fracture origin of the resulting carbon fiber-reinforced composite, leading to fracture of the whole carbon fiber-reinforced composite. Thus, the interfacial shear strength is preferably 16 MPa or less because this interfacial shear strength makes it easier to enhance the tensile strength B' of resin-impregnated strands, the tensile strength C' of resin-impregnated strands, or the strength of the resulting carbon fiber-reinforced composite actually formed.

In addition, for the carbon fiber bundle, it is preferable that the single-fiber diameter is 6.6 μm or more, that the tensile strength A' of resin-impregnated strands is 5.0 GPa or more and 6.0 GPa or less, that the tensile strength C' of resin-impregnated strands is 4.8 GPa or more and 5.5 GPa or less, that the strength transition rate β is 85% or more and 100% or less, and that the interfacial shear strength is 16 MPa or less. A carbon fiber bundle allowed to satisfy these simultaneously can be advantageous to enhance the tensile strength of the resulting carbon fiber-reinforced composite and the pressure resistance of the resulting pressure vessel. In this regard, these parameters can be in the above-described preferable ranges. In addition, the carbon fiber bundle can be further made into a preferable aspect described herein.

For a precursor fiber bundle for carbon fiber to be used for production of a carbon fiber bundle according to the present invention, it is preferable that the cross-sectional shape of the constituent single yarn is closer to a perfect circle, and in addition, that the roughness of the surface is smaller. Specifically, the circularity of the precursor fiber bundle for carbon fiber is preferably in the range of from 0.80 to 0.99, more preferably in the range of from 0.90 to 0.99. In addition, the surface-area ratio of the precursor fiber bundle for carbon fiber is preferably in the range of from 1.00 to 1.08, more preferably in the range of from 1.00 to 1.05. The precursor fiber bundle having a single yarn the cross-sectional shape of which is less close to a perfect circle results in a higher possibility that the carbon fiber bundle to which a stress is applied generates a stress concentration, and is fractured. From the viewpoint of avoiding such a stress concentration, the surface-area ratio s preferably 1.08 or less. In addition, for the same reason, the circularity is preferably 0.80 or more. Such a circularity and a surface-area ratio can be measured using the below-described method, and can be controlled in accordance with the spinning conditions. A carbon fiber bundle can be produced, for example, as follows: a spinning dope solution kept at a high temperature is once extruded through spinnerets from a coagulation bath into air, and introduced into a coagulation bath kept at a relatively low temperature; the polymer concentration and the solvent concentration and temperature of the coagulation bath are set; the resulting coagulated yarn is stretched, washed with water, treated with an oil agent, steam-stretched, and so forth to produce a precursor fiber bundle for carbon fiber, the bundle having a specific circularity and a specific surface-area ratio; and the precursor fiber bundle is stabilized and carbonized. Th circularity and the surface-area ratio that are controlled in the precursor fiber for carbon fiber are kept at substantially the same values even when the precursor fiber is carbon-fiberized. Thus, a carbon fiber bundle according to the present invention has a circularity preferably in the range of from 0.80 to 0.99, and in addition, has a surface-area ratio preferably in the range of from 1.00 to 1.08.

A sizing agent to be used for a carbon fiber bundle according to the present invention preferably contains at least

one component containing an epoxy group. In addition, the carbon fiber bundle preferably satisfies the relation of the following Formula 1, more preferably further satisfies the relation of the following Formula 2, wherein the epoxy value of the sizing agent eluted by immersing the carbon fiber bundle in *N*,*N*-dimethylformamide and ultrasonicating the carbon fiber bundle is X meq./g, and wherein the ratio of attachment of the sizing agent added to the carbon fiber bundle is Y mass%.

$$0.10 \text{ meq./g} \leq X \times Y \leq 0.68 \text{ meq./g} \ldots \text{Formula 1}$$

$$0.10 \text{ meq./g} \leq X \times Y \leq 0.40 \text{ meq./g} \ldots \text{Formula 2}$$

An epoxy value is an index that indicates the amount of epoxy groups contained per g of a sizing agent. The larger the epoxy value is, the larger amount of epoxy groups per g of a sizing agent are contained. In addition, the ratio of attachment of sizing is the total mass of a sizing agent eluted from a carbon fiber bundle immersed in *N*,*N*-dimethylformamide and ultrasonicated, in which the total mass is expressed in percentage (mass%), assuming that the mass of the carbon fiber bundle is 100 mass%.

Accordingly, X × Y in Formula 1 and Formula 2 is an index that indicates the amount of epoxy groups contained per unit mass, that is, 1 g of a carbon fiber bundle. The larger X × Y is, the more easily the interface adhesion property between the carbon fiber bundle and the resin is enhanced. Low adhesion between the carbon fiber and the resin causes debonding at the interface between the carbon fiber and the resin, leading to fracture of the whole carbon fiber-reinforced composite in some cases, and thus, is not preferable. On the other hand, too high adhesion between the carbon fiber and the resin more easily generates a stress concentration at a fracture origin in the resulting carbon fiber-reinforced composite, leading to fracture of the whole carbon fiber-reinforced composite, and thus, is not preferable.

Controlling X × Y in the range of Formula 1 makes it easier to enhance the strength of the resulting carbon fiber-reinforced composite actually formed. In addition, controlling X × Y in the range of Formula 2 makes it easier for the carbon fiber-reinforced composite to be extremely excellent for practical use.

The drape value of a carbon fiber bundle according to the present invention is preferably more than 0 cm and 18 cm or less, more preferably 4 cm or more and 16 cm or less, still more preferably 4 cm or more and 10 cm or less. The drape value is an index that indicates the hardness of a carbon fiber bundle. A larger drape value represents the harder characteristics of a carbon fiber bundle.

A fiber bundle having a drape value less than 4 cm is soft. Thus, a bend and a twist are easily generated at guide parts such as combs intended to arrange fibers withdrawn from a bobbin during production of a composite material. Generation of a bend or a twist makes it difficult to spread such a portion, causing spreading unevenness, and thus, is not preferable. In addition, a fiber bundle having a drape value larger than 18 cm is hard. Thus, in some of the cases where the fiber bundle comes into contact with guide parts such as combs, and is deformed, the fiber bundle is more likely to generate fuzz. Having a drape value of 4 cm or more and 10 cm or less makes it possible to inhibit both of spreading unevenness and generation of fuzz during the contact with guide parts, and thus, is preferable.

The number of filaments of a carbon fiber bundle according to the present invention is preferably 12,000 or more, more preferably 24,000 or more. When a composite material is produced through filament winding, the productivity depends on the yarn speed and the number of filaments. Thus, with a large number filaments, a composite material can be efficiently produced. The number of filaments that is 12,000 or more is satisfactory from the viewpoint of productivity. The number of filaments is not particularly limited to any upper limit. The larger the number of filaments is, the more likely it is that areal-weight nonuniformity due to stretching unevenness in and out of a yarn bundle in a stretching process is generated. Accordingly, the number of filaments is preferably 36,000 or less.

Next, a method of producing a carbon fiber bundle, namely, a method suitable to obtain a carbon fiber bundle according to the present invention, will be described.

A precursor fiber bundle for carbon fiber according to the present invention can be obtained by spinning a spinning dope solution of a polyacrylonitrile copolymer. As a polyacrylonitrile copolymer, not only a homopolymer obtained from acrylonitrile alone but also another monomer in addition to acrylonitrile as a main component may be used. Specifically, the polyacrylonitrile copolymer preferably contains acrylonitrile at 90 to 100 mass% and a copolymerizable monomer at less than 10 mass%.

Examples of a usable monomer copolymerizable with acrylonitrile include: acrylic acid, methacrylic acid, itaconic acid, and alkali metal salts thereof; ammonium salts and lower alkyl esters; acrylamide and derivatives thereof; allylsulfonic acid, methallylsulfonic acid, and salts thereof; and alkyl esters.

The polyacrylonitrile copolymer is dissolved in a solvent in which the polyacrylonitrile copolymer is soluble, such as dimethyl sulfoxide, dimethylformamide, dimethyl acetamide, nitric acid, an aqueous zinc chloride solution, or an aqueous sodium rhodanide solution, to form a spinning dope solution. In a case where solution polymerization is used to produce a polyacrylonitrile copolymer, using a solvent for the polymerization and a spinning solvent that are the same eliminates the necessity of the process of separating the resulting polyacrylonitrile copolymer, and redissolving the

polyacrylonitrile copolymer in the spinning solvent, and thus, is preferable.

To produce a precursor fiber bundle for carbon fiber, any spinning method of a dry-jet wet spinning method and a wet spinning method may be used. It is preferable to use a dry-jet wet spinning method advantageous for the knot strength of the resulting carbon fiber bundle. The spinning process is composed of: an extruding process in which a spinning dope solution is extruded into a coagulation bath through spinnerets using a dry-jet wet spinning method, and thus spun; a water-washing process in which the fiber obtained in the extruding process is cleaned in a water bath; a water-bath stretching process in which the fiber obtained in the water-washing process is stretched in a water bath; and a dry-heat-treatment process in which the fiber obtained in the water-bath stretching process is dry-heat-treated. As required, the spinning process may include a steam-stretching process in which the fiber obtained in the dry-heat-treatment process is steam-stretched. In addition, as required, the spinning process preferably includes a gathering process of matching the precursor fiber bundle to the number of filaments of a carbon fiber bundle. In this regard, the order of these processes may be suitably changed. The spinning dope solution is obtained by dissolving the polyacrylonitrile-based polymer in a solvent in which polyacrylonitrile is soluble, such as dimethyl sulfoxide, dimethyl formamide, or dimethyl acetamide.

The coagulation bath preferably contains a solvent and a coagulant, in which the solvent is used as a solvent for a spinning dope solution, namely, a solvent such as dimethyl sulfoxide, dimethyl formamide, or dimethyl acetamide. Examples of the coagulant that can be used include a coagulant that does not dissolve the polyacrylonitrile-based polymer, and has compatibility with a solvent to be used for a spinning dope solution. Specifically, water is preferably used as the coagulant.

The degree of swelling of coagulated yarn obtained by spinning an acryl-based polymer solution (hereinafter referred to as "the degree of swelling of coagulated yarn" or also referred to simply as "the degree of swelling") is preferably controlled at less than 120%, more preferably controlled at less than 110%. In a case where the degree of swelling is less than 3%, desolvation in the water-washing process takes time, and thus, the lower limit is 3%. Controlling the degree of swelling at 3 to 120% allows a balance to be struck between the tensile strength and processability of a carbon fiber, and thus, is still more preferable. The degree of swelling of coagulated yarn is an index that reflects the denseness of a precursor fiber bundle for carbon fiber. The denser the precursor fiber bundle for carbon fiber is, the more easily the denseness of the resulting carbon fiber bundle is enhanced. The degree of swelling of coagulated yarn can be decreased by decreasing the tension in the coagulation process. The coagulated yarn tension can be decreased, for example, as follows: friction applied per single yarn is decreased by increasing the number of single fibers in the coagulation bath, changing the fixing guide parts to a free roller, or using fixing guide parts the surface of which, or a free roller the surface of which, is satin-finished; or the fluid resistance received by a single yarn from the coagulation bath liquid is decreased by adjusting the composition and temperature of the coagulation bath to decrease the viscosity of the coagulation bath liquid, or causing a yarn guide change or rectification in the coagulation bath.

In the present invention, a PAN-based polymer solution is introduced into a coagulation bath liquid to be coagulated, and then, undergoes a water-washing process, stretching process, oil-agent-adding process, and drying process to afford a precursor fiber bundle for carbon fiber.

The water-washing process is introduced for the purpose of introducing, into a water-washing bath, the coagulated fiber bundle from an aerial retention process, and further removing an organic solvent from the coagulated fiber bundle. To enhance the runningpassability of the fiber in the water-washing process, the fiber may be stretched 1- to 1.5-fold in the water-washing process.

The stretching process can usually be performed in a single or a plurality of stretching baths at a temperature regulated at 30 to 98°C. Stretching in a bath in the stretching process is referred to as an in-bath stretching, and the magnification ratio of the stretching is referred to as an in-bath stretch ratio. The in-bath stretch ratio is preferably set at 2 to 2.8 times. **In** a case where the total stretch ratio before the oil-agent-adding process exceeds 3 times, the denseness of the surface layer is decreased, making it easer for the oil agent to permeate the fiber. The total stretch ratio before the oil-agent-adding process is the product of the stretch ratio in the water-washing process and the in-bath stretch ratio.

The oil-agent-adding process is a process of adding an oil agent for the purpose of preventing adhesion among fibers after the in-bath stretching process. As an oil agent to be used in the present process, an oil agent containing silicone as a main component is preferably used. An oil agent containing no silicone does not enable interfiber adhesion to be inhibited in the stabilization process, and thus, decreases the tensile strength of resin-impregnated strands. In addition, a silicone oil agent to be preferably used contains a modified silicone, such as an amino-modified silicone having high heat resistance. Examples of another silicone oil agent include a modified silicone such as epoxy-modified or alkylene-oxide-modified.

As the drying process, a known method can be utilized. In addition, from the viewpoints of enhancing productivity and enhancing the orientation parameter of crystallites, the fiber is preferably stretched in a heating medium after the drying process. As the heating medium, for example, steam under pressure or superheated steam is suitably used from the viewpoints of operational stability and cost.

In this regard, after the drying process, a dry heat stretch process or a steam stretch process may be further added.

Next, a method of producing a carbon fiber bundle according to the present invention will be described. In a method of producing a carbon fiber bundle according to the present invention, a carbon fiber bundle is produced, for example, by performing the following: a stabilization process in which a precursor fiber bundle for carbon fiber, produced in the above-described method, is stabilized in an oxidizing atmosphere at a temperature of 200 to 300°C; a pre-carbonization process in which the fiber bundle is pre-carbonized in inert atmosphere at the highest temperature of 500 to 1,200°C; and then a carbonization process in which the fiber bundle is carbonized in inert atmosphere at the highest temperature of 1,200 to 2,000°C.

As an oxidizing atmosphere in the stabilization treatment, air is preferably adopted. In the present invention, the pre-carbonization treatment and the carbonization treatment are performed in inert atmosphere. Examples of the gas to be used as inert atmosphere include nitrogen, argon, and xenon. From an economical viewpoint, nitrogen is preferably used.

The resulting carbon fiber bundle can be electrolyzed for the purpose of surface modification. This is because, by the electrolyzation, adhesion with a carbon fiber matrix in the resulting fiber-reinforced composite material can be made suitable. After the electrolyzation, a sizing treatment is performed to give convergency to the carbon fiber bundle. As a sizing agent, a sizing agent having good compatibility with a matrix resin can be suitably selected in accordance with the kind of a resin to be used. It is important to control the adhesion to achieve both inhibition of interfacial debonding between the carbon fiber and the resin in the resulting carbon fiber-reinforced composite and mitigation of a stress concentration, and to transit good mechanical properties.

For this, it is preferable, for example, to optimize the electrolyzation conditions, such as the kind and concentration of an electrolyte solution and the ratio of attachment of a sizing agent, and to control the amount of a functional group contained in the sizing agent. In a case where the sizing agent contains an epoxy group, the epoxy group is preferably hydrolyzed preliminarily or after addition of the sizing agent to a carbon fiber bundle to adjust the amount of the epoxy group.

For a process of producing a carbon fiber-reinforced composite material using a carbon fiber bundle according to the present invention, a known method can be utilized. The process can be used in many fields, such as aerospace, automobiles, railroad vehicles, ships, civil engineering and construction, and sports goods. In particular, the process can be suitably used to produce a hollow container, such as a pressure vessel, and a cylinder.

Examples

Methods of measuring various property values used in the present invention are as follows.

<Coagulated yarn tension>

Coagulated yarn tension was measured at the outlet of a coagulation bath in the coagulation process. The tension was determined by measuring a load using a tensiometer with running fibers sandwiched, and dividing the load by the fineness (dtex) of the process fibers at the point of measurement.

<Determination of degree of swelling of coagulated yarn>

First, approximately 10 g of a coagulated yarn was sampled, and washed with water for 12 hours or more. Next, the sample was dehydrated using a centrifugal dehydrator (for example, H-110A, manufactured by Kokusan Co., Ltd.) at 3,000 rpm for 3 minutes. Then, the fiber mass (the unit, g) after the dehydration was determined. Then, the sample after dehydration was dried for 2.5 hours in a dryer temperature-regulated at 105°C. The fiber mass (the unit, g) after drying was determined. The degree of swelling of the coagulated yarn was calculated in accordance with the following Formula. Here, the calculation result was rounded off to the nearest integer.

Formula: degree of swelling of coagulated yarn (%) = ((fiber mass after dehydration - fiber mass after drying)/fiber mass after drying)) $\times$100

The degree of swelling calculated was rated in four steps on the basis of the following criterion.

S: the degree of swelling, 3% or more and less than 110%
A: the degree of swelling, 110% or more and less than 120%
B: the degree of swelling, 120% or more and less than 150%
C: the degree of swelling, less than 3% or 150% or more

<Total fineness>

A sample 10 m in length was taken from a carbon fiber bundle to be measured, and bone-dried at 120°C for 2 hours. Then, the mass (the unit, g) was measured and divided by 10 to determine the total fineness (the unit, g/m), which is mass per m.

<Density>

A carbon fiber bundle to be measured was bone-dried at 120°C for 2 hours, and measured. To measure the density, a dry-type automatic densimeter was used. Nitrogen was used as a measuring medium. The sample container used was of a 10 cc type. The amount of the sample was adjusted to a volume of 3 to 6 cc. A measurement was made three times, and the average of the measurements was used. In the present measurement, a dry-type automatic densimeter model AccuPyc 1330 manufactured by Shimadzu Corporation was used.

<Single-fiber diameter>

The single-fiber diameter was calculated from the total fineness (g/m) and the density (g/m$^3$), which were determined using the above-described methods, and from the number of filaments of the carbon fiber bundle used for measurement. In this regard, the unit of the single-fiber diameter d determined was μm.

<Tensile strength and tensile modulus of resin-impregnated strands of carbon fiber bundle>

The tensile strength of resin-impregnated strands and tensile modulus of resin-impregnated strands of a carbon fiber bundle were determined using each of Resin Formulations (Resin Formulation A, Resin Formulation B, Resin Formulation C, and Resin Formulation D) in accordance with the method of testing the tensile strength of resin-impregnated strands in JIS R7608 (2007). In this regard, the curing conditions are as shown in each of Resin Formulations. When Resin Formulation B, Resin Formulation C, and Resin Formulation D were each used, each Resin Formulation was used in place of Resin Formulation A. In addition, Resin Formulation B and Resin Formulation D were heated to 60°C during impregnation. Ten strands of the carbon fiber bundle were measured, and the average of the measurements was regarded as the tensile strength of resin-impregnated strands or the tensile modulus of resin-impregnated strands. The tensile modulus of resin-impregnated strands was measured in the range of strain of from 0.1 to 0.6%. In this regard, the measurement result of Resin Formulation A was used for the tensile modulus of resin-impregnated strands (tensile modulus E of resin-impregnated strands) in the below-described single-fiber loop test.

<Single-fiber loop test>

A single fiber approximately 10 cm in length was placed on a glass slide, and one or two drops of glycerin were dropped onto the central portion of the single fiber. Both ends of the single fiber were twisted lightly in the circumferential direction of the fiber to make one loop in the central portion of the single fiber. On the loop, a piece of cover glass was placed. These were disposed on the stage of a microscope. Video shooting was started under the conditions of a total magnification ratio of 100 times and a frame rate of 15 frames/second. While the stage was regulated, when necessary, so that the loop could not go out of the visual field, both ends of the fiber looped were pressed with a finger in the direction of the glass slide, and simultaneously pulled in the opposite direction at a given speed, whereby a strain was applied until the single fiber was fractured. A frame just before loop fracture was identified through frame-by-frame playback, and the diameter W of the loop just before loop fracture was measured by image analysis. The single-fiber diameter d was divided by the loop diameter W to calculate d/W. A measurement was made 20 times. The average of the d/W values were determined. This average of the d/W values was multiplied by the tensile modulus of resin-impregnated strands to determine $E \times d/W$.

<Measurement of interfacial shear strength>

The interfacial shear strength was measured in accordance with the following procedures (1) to (4).

(1) Preparation of resin

Each of 100 parts by mass of a bisphenol A epoxy compound "jER (registered trademark)" 828 (manufactured by Mitsubishi Chemical Corporation) and 14.5 parts by mass of methaphenylenediamine (manufactured by Sigma-Aldrich Japan LLC) was introduced into a container. Then, the resulting mixture was heated at a temperature of 75°C for 15

minutes to decrease the viscosity of the jER828, and dissolve methaphenylenediamine. Then, both were mixed well, and defoamed in vacuo at a temperature of 80°C for approximately 15 minutes.

(2) Fixing carbon-fiber single yarn to special mold

One single fiber was extracted from a carbon fiber bundle. Both ends were fixed with an adhesive in a state where a given tension was applied to the single fiber in the longitudinal direction of a dumbbell type mold. Then, to remove water attached to the carbon fiber and the mold, both thereof were dried in vacuo at a temperature of 80°C for 30 minutes or more. The dumbbell type mold was made of silicone rubber, and the shape of the casting portion used was as follows: the central portion had a width of 5 mm and a length of 25 mm; both end portions each had a width of 10 mm and the whole length of 150 mm.

(3) From resin casting to curing

Into the mold dried in vacuo in the procedure (2), the resin prepared in the procedure (1) was casted, heated to a temperature of 75°C at a heating rate of 1.5°C/minute using an oven, retained for 2 hours, then heated to a temperature of 125°C at a heating rate of 1.5°C/minute, retained for 2 hours, and then cooled to a temperature of 30°C at a cooling rate of 2.5°C/minute. Then, the resin was demolded to obtain a test piece.

(4) Measurement of interfacial shear strength

A tensile force was applied to the test piece obtained in the procedure (3) in the fiber-axis direction (longitudinal direction), whereby a strain of 12% was generated. Then, using a polarization microscope, measurements were made of the number N (positions) of the positions at which the single fiber embedded in the test piece was fractured in the 22 mm range of the central portion of the test piece in the longitudinal direction. Next, the average fracture fiber length la was calculated in accordance with the formula: la ($\mu$m) = 22 $\times$ 1,000 ($\mu$m) / N (positions). Next, from the average fracture fiber length la, the critical fiber length lc was calculated in accordance with the formula: lc ($\mu$m) = (4/3) $\times$ la ($\mu$m). Using the tensile strength A' of resin-impregnated strands and the single-fiber diameter d that were determined using the above-described methods, an interfacial shear strength, which is an index of the strength of adhesion at the interface between the carbon fiber and the resin, was calculated in accordance with the following Formula. Measurements were made five times, and the arithmetic average of the measurements was regarded as a test result.

Interfacial shear strength (MPa) = tensile strength A' of resin-impregnated strands (MPa) $\times$ single-fiber diameter d ($\mu$m)/(2 $\times$ lc) ($\mu$m)

<Circularity>

A precursor fiber bundle for carbon fiber or a carbon fiber bundle was cut vertically to the fiber axis, using a razor. The cross-sectional shape of the single fiber was observed using an optical microscope. The magnification ratio of measurement was set at 200 to 400 times in such a manner that the thinnest single fiber was observed at approximately 1 mm. The image obtained was analyzed to determine the cross-sectional area and perimeter of the single yarn. From the cross-sectional area, the diameter (fiber diameter) of the cross section of the single yarn assumed to be a perfect circle was determined by calculation in units of 0.1 $\mu$m. The circularity was determined using the following Formula. For the circularity, the average of the values of 10 single yarns selected randomly was used.

Circularity = 4 $\pi S/L^2$ (wherein S represents the cross-sectional area (the unit, $\mu m^2$) of the single yarn, and L represents the perimeter (the unit, $\mu$m) of the single yarn)

<Surface-area ratio>

Several single fibers were extracted from a precursor fiber bundle for carbon fiber or from a carbon fiber bundle. The single yarns extracted were placed on a sample table, both ends of which single yarns were fixed with adhesive fluid (for example, correcting fluid that is stationery). The resulting single yarns were each used as a sample, which was used to give an image of the three-dimensional surface under the following conditions under an atomic force microscope (SPI3800N/SPA-400, manufactured by Seiko Instruments Inc.).

- Probe: a silicon cantilever (DF-20, manufactured by Seiko Instruments Inc.)
- Measurement mode: a dynamic force mode (DFM)

- Scanning rate: 1.5 Hz
- Scanning range: 3 μm × 3 μm
- Resolution: 256 pixels × 256 pixels

From all the data of the measurement image obtained, a primary plane was determined, using the least squares method, in accordance with the attached software, considering the curvature of the cross section of the fiber, and underwent fitting. Primary-slope correction for correcting the in-plane slope was performed, and in the same manner, secondary-slope correction for correcting the secondary curve was subsequently performed. Then, using the attached software, the surface roughness was analyzed. The surface-area ratio to the surface assumed to be smooth was calculated. Five different single yarns were sampled randomly. A measurement was made once per single yarn, five times in total. The arithmetic average of the measurements was regarded as the surface-area ratio.

<Measurement of ratio of attachment of sizing agent (Sz-attachment ratio) added to carbon fiber bundle>

A sample in an amount of 2.0 ± 0.5 g was weighed out ($W_1$) (read to four decimal places), and then left to stand for 15 minutes in a nitrogen gas stream set at 50 milliliters/minute in an electric oven (having a capacity of 120 $cm^3$) set at a temperature of 450°C. The sizing agent was thermally degraded completely. Then, the sample was transferred into a container in a dry nitrogen gas stream set at 20 liters/minute, and cooled for 15 minutes. Then, the carbon fiber bundle was weighed out ($W_2$) (read to four decimal places), and the amount of attachment of sizing was determined in accordance with $W_1$ - $W_2$. This amount of attachment of the sizing agent was divided by $W_1$, and converted to mass% assuming that the whole carbon fiber bundle containing a sizing was 100 mass%. The converted value (rounded off to two decimal places) was regarded as the ratio of attachment of the sizing agent attached (mass%). A measurement was made twice, and the average of the measurements was regarded as the ratio (mass%) of attachment of the sizing agent.

<Measurement of epoxy value>

The sample in an amount of 30 g was immersed in 150 ml of *N*,*N*-dimethyl formamide at a temperature of 25°C, and ultrasonicated at a frequency of 40 kHz three times for 30 minutes each, thus allowing a sizing agent solution to be eluted from the fiber. The solution was analyzed to determine the epoxy value. In this regard, when the sizing agent was eluted from the carbon fiber bundle having the sizing agent added thereto, the sizing agent remaining in the carbon fiber is preferably 0.20 mass% or less. Using the sizing agent solution eluted, and using hydrochloric acid, the epoxy group was ring-opened, and the epoxy value was determined through acid-base titration.

<Measurement of drape value>

As shown in FIG. 1, a weight 3 was hung at a load of 0.0375 [g/tex] from a carbon fiber bundle 2 cut to 50 cm, in an atmosphere of a temperature of 25°C, and left to stand for 30 minutes or more to untwist remaining twists. From the central portion of the carbon fiber bundle, a portion 30 cm in length was sampled. As shown in FIG. 2, the carbon fiber bundle 2 was placed on a rectangular horizontal table 4 having a 90° corner in such a manner that the carbon fiber bundle protruded by 25 cm from the table. Supported so as not to be folded, the carbon fiber bundle 2 was fixed on the horizontal table 4 with a tape. Then, the support to the carbon fiber bundle 2 protruding from the horizontal table 4 was eliminated, and thus, the carbon fiber bundle was allowed to hang down. One second later, the length of the horizontal distance L from the fulcrum was measured. A measurement was made five times, and the arithmetic average of the measurements was regarded as a drape value.

<Processability of carbon fiber bundle>

Two metal bars (made of stainless steel) having a diameter of 50 mm and a surface roughness Rmax of 0.3 μm were disposed above and below at an interval of 150 mm in such a manner that the carbon fiber bundle passed in contact with each metal bar at an angle of 0.3925 π (rad) ± 0.04 π (rad), 0.785 π (rad) in total. Then, a carbon fiber bundle containing 12,000 filaments was hung on the metal bars. An unravelling tension from the package was set at 800 g. The carbon fiber bundle was pulled by a driving roll at 4 m/minute to pass the metal bars. The number of pieces of fuzz in 1 minute after passing the second metal bar was counted, and regarded as processability.

Number of pieces of process fuzz (pieces/m) of carbon fiber bundle = count of pieces of fuzz (pieces)/4 (m)

A: the number of pieces of process fuzz is 3.5 pieces/m or less.
B: the number of pieces of process fuzz is more than 3.5 pieces/m and 5.0 pieces/m or less.
C: the number of pieces of process fuzz is more than 5.0 pieces/m.

In a case where the number of filaments of a carbon fiber bundle to be measured was 24,000, the unravelling tension was set at 1,600 g, and the number of pieces of process fuzz counted was divided by $\sqrt{2}$, whereby the basis for evaluation was made uniform. The processability was thus determined. A and B are preferable results in the present invention, and A is a more preferable result.

<Pressure resistance of pressure vessel>

A pressure vessel 11 as a sample was disposed in a hydraulic bursting test device for a pressure vessel, as illustrated in FIG. 3. Water was sent by a hydraulic pump 7 to pressurize the container. A burst pressure at which the container was burst was measured. A measurement was made three times. The arithmetic average of the measurements was used to evaluate the pressure-resistant performance in accordance with the following criterion for determination. In this regard, "-" represents missingness.

A: the burst pressure was 75 MPa or more.
B: the burst pressure was 70 MPa or more and less than 75 MPa.
C: the burst pressure was less than 70 MPa.

[Preparation of sizing agent]

Ethylene oxide was added to bisphenol A using a potassium hydroxide catalyst, and then, the catalyst was treated to obtain an ethylene oxide (2 moles) adduct of bisphenol A. In a 1 L flask with a stirrer, stirring vane, nitrogen seal, and rectifying column, 2 moles of the ethylene oxide adduct of bisphenol A, 1.5 moles of maleic acid, and 0.5 moles of sebacic acid were preliminarily well mixed. With nitrogen being sparged into the resulting liquid, the liquid was stirred under heating at 160°C for 4 hours, and the water generated was distilled off to obtain a condensate of an unsaturated dibasic acid and an alkylene oxide adduct of a bisphenol. A water-dispersion emulsion composed of 2 parts by mass of the condensate, 2 parts by mass of "jER (registered trademark)" 828 (manufactured by Mitsubishi Chemical Corporation), 1 part by mass of polyoxyethylene (70 moles) styrenated (5 moles) cumylphenol, and 95 parts by mass of distilled water was adjusted to obtain a sizing agent i. Next, the sizing agent i was heated under the conditions according to Table 1 to obtain a sizing agent ii and a sizing agent iii.

[Table 1]

| | Storage temperature (°C) | Storage time (hours) | Component containing epoxy group |
|---|---|---|---|
| Sizing agent i | - | - | contained |
| Sizing agent ii | 55 | 140 | contained |
| Sizing agent iii | 55 | 445 | contained |

In addition, a 10-mole ethylene oxide adduct of bisphenol A shown by the following Formula was used as a sizing agent iv.

[Chem. 1]

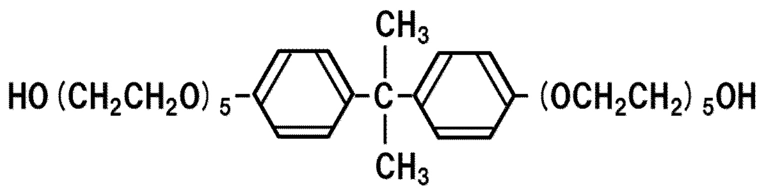

[Example 1]

A copolymer composed of acrylonitrile and itaconic acid was dissolved in dimethyl sulfoxide to produce a spinning dope solution. The resulting spinning dope solution was once extruded into air through a spinneret having 3,000 holes. Dimethyl sulfoxide and water as a coagulation accelerator were mixed at a ratio of 80 mass% to 20 mass% to produce a coagulation bath liquid (hereinafter, the ratio of the mass of the components other than the coagulation accelerator in the coagulation bath liquid is also referred to as a "coagulation bath concentration"). The spinning dope solution was introduced into the coagulation bath liquid controlled at a temperature of -5°C to obtain a coagulated yarn. This process of obtaining a coagulated yarn is abbreviated as a "coagulation process".
In the water-washing process, the coagulated yarn was introduced into a water-washing bath to be washed with water. Then, in the stretching process, the coagulated yarn was bathstretched in warm water of 90°C. In this case, the total stretch ratio was set at 2.3 times. Subsequently, in the oil-agent-adding process, an amino-modified silicone-based silicone oil agent was added to this fiber bundle. Then, using a roller heated to 180°C, the resulting fiber bundle was dried and adjusted to have 12,000 single fibers. Then, the fiber bundle was stretched 5-fold in a pressurized steam, whereby the total stretch ratio of spinning was brought to 12 times to obtain a polyacrylonitrile-based precursor fiber bundle having a single fiber fineness of 1.1 dtex.
Next, the resulting polyacrylonitrile-based precursor fiber bundle was treated in the below-described carbonization process to obtain a carbon fiber bundle.
In the stabilization process, the resulting polyacrylonitrile-based precursor fiber bundle was stabilized in air at a temperature of 200 to 300°C to obtain a stabilized fiber bundle.
The stabilized fiber bundle obtained in the stabilization process was pre-carbonized in a nitrogen atmosphere of the highest temperature of 800°C in the pre-carbonization process to obtain a pre-carbonized fiber bundle.
The pre-carbonized fiber bundle obtained in the pre-carbonization process was carbonized at the highest temperature of 1,300°C in a nitrogen atmosphere in the carbonization process.
Subsequently, the surface of the resulting fiber bundle underwent electrochemical treatment with an aqueous sulfuric acid solution used as an electrolyte solution. The resulting fiber bundle was washed with water, dried, and then supplemented with the sizing agent i to obtain a carbon fiber bundle.
Next, a mixture (mixture B) of "JER (registered trademark)" 828, dicyandiamide, and 3-(3,4-dichlorophenyl)-1,1-dimethylurea at a ratio of 100:6.3:2 (parts by mass) was prepared.
Using a towpreg producing device including a creel, kiss-roll, nip roll, and winder, one side of the carbon fiber bundle obtained was coated with the mixture B adjusted to a temperature of 60°C, in such a manner that the amount of coating would be 22 to 28 mass% with respect to the total mass of a towpreg. Then, the carbon fiber bundle was allowed to pass through the nip roll, and impregnated up to the inside with the mixture B to obtain the towpreg. When this was performed, the bobbin for the towpreg was set at an initial tension of 600 to 1,000 gf and a wind ratio of 6 to 10. The carbon fiber 2,300 m was wound around a paper tube so as to form a cylinder having a winding width of 230 to 260 mm. On a filament winding molding device, a 7.5 L polyethylene-made liner was disposed, and the towpreg was wound around the whole liner to produce a pressure vessel. Specifically, a hoop layer at an angle of +89° with the axial direction of the liner and a hoop layer at an angle of -89° with the axial direction of the liner were wound in the form of a first layer having a thickness of 1.4 mm. Next, a helical layer at an angle of +20° with the axial direction of the liner and a helical layer at an angle of -20° with the axial direction of the liner were wound in the form of a second layer having a thickness of 2.2 mm. Furthermore, a third layer, which was composed of a hoop layer at an angle of +89° with the axial direction of the liner and a hoop layer at an angle of -89° with the axial direction of the liner, was wound so as to have a thickness of 0.6 mm, whereby an intermediate was obtained. The intermediate, being rotated, was cured in a curing oven at 130°C for 90 minutes to obtain a pressure vessel for a pressure test. The results are summarized in Table 2 and Table 3.

[Example 2]

A carbon fiber bundle having a sizing agent added thereto was obtained in the same manner as in Example 1 except that the amount of dimethyl sulfoxide in the coagulation bath liquid was changed to 79 mass% (a coagulation bath concentration of 79 mass%). The results are summarized in Table 2 and Table 3.

[Comparative Example 1]

A carbon fiber bundle having a sizing agent added thereto was obtained in the same manner as in Example 1 except that the friction resistance (coagulated yarn tension) received by the coagulated yarn was increased by changing the temperature of the coagulation bath liquid to 5°C in the coagulation process, and changing the free roller to fixing guide parts in the coagulation process. Compared with Example 1, the coagulated yarn tension was increased, the degree of swelling of the coagulated yarn was increased, and the denseness of the precursor fiber bundle obtained was insufficient.

The tensile strength A' of resin-impregnated strands was 5.5 GPa, and the tensile strength B' of resin-impregnated strands was 4.5 GPa. In a case where Resin Formulation B was used, a decrease in the tensile strength of resin-impregnated strands was larger, and the strength transition rate $\alpha$ of 82% was lower than in Example 1. The results are summarized in Table 2 and Table 3. In addition, the pressure resistance of the pressure vessel obtained was poorer than in Example 1.

[Example 3]

A carbon fiber bundle having a sizing agent added thereto was obtained in the same manner as in Example 1 except that the number of holes of the spinneret was changed to 6,000, and that the amount of dimethyl sulfoxide in the coagulation bath liquid was changed to 82 mass%. In this case, the tensile strength A' of resin-impregnated strands was 5.5 GPa, the tensile strength B' of resin-impregnated strands was 4.9 GPa, and the strength transition rate $\alpha$ was 89%. Compared with Comparative Example 1, the tensile strength B' of resin-impregnated strands and the pressure resistance of the pressure vessel resulted in being enhanced in Example 3 in which the denseness of the precursor fiber bundle was good. On the other hand, when attention is paid to the tensile strength A' of resin-impregnated strands, it is found that the strength was 5.5 GPa, which was the same between Example 3 and Comparative Example 1, resulting in not reflecting enhancement of the pressure resistance of the pressure vessel. The results are summarized in Table 2 and Table 3.

[Example 4]

A carbon fiber bundle having a sizing agent added thereto was obtained in the same manner as in Example 1 except that the number of holes of the spinneret was changed to 6,000. It is suggested that increasing the number of holes of the spinneret, and decreasing the friction resistance borne per coagulated yarn allowed the degree of swelling to be judged better than in Example 1, and brought about a dense structure. In this case, the tensile strength A' of resin-impregnated strands was 5.7 GPa, the tensile strength B' of resin-impregnated strands was 5.0 GPa, and the strength transition rate $\alpha$ was 88%. In the case where Resin Formulation B was used, the tensile strength of resin-impregnated strands was higher than in Example 1, thus enhancing the strength transition rate $\alpha$. The results are summarized in Table 2 and Table 3.

[Example 5]

A carbon fiber bundle having a sizing agent added thereto was obtained in the same manner as in Example 4 except that the ratio of attachment of the sizing agent was changed so as to bring the interfacial shear strength to 14 MPa. In this case, the tensile strength A' of resin-impregnated strands was 5.7 GPa, the tensile strength B' of resin-impregnated strands was 5.2 GPa, and the strength transition rate was 91%. In addition, the pressure resistance of the pressure vessel was higher than in Example 1 and Comparative Example 1. The results are summarized in Table 2 and Table 3.

[Comparative Example 2]

A carbon fiber bundle having a sizing agent added thereto was obtained in the same manner as in Comparative Example 1 except that a semi-coagulated fiber bundle was retained in air for 200 seconds to increase in the denseness, and then used in the process following the water-washing, in which the semi-coagulated fiber bundle had been obtained by being taken up in such a manner that the immersion time in the coagulation bath liquid was adjusted to 0.2 seconds by changing the yarn guide in the coagulation process. In this case, compared with Comparative Example 1, the degree of swelling of the coagulated yarn was found to be improved, and the tensile strength A' of resin-impregnated strands and the tensile strength B' of resin-impregnated strands were enhanced to 5.6 GPa and 4.7 GPa respectively, but the strength transition rate $\alpha$ was 84%, which was not sufficient for use for a carbon fiber-reinforced composite material. The results are summarized in Table 2 and Table 3.

[Comparative Example 3]

A carbon fiber bundle having a sizing agent added thereto was obtained in the same manner as in Comparative Example 2 except that the number of holes of the spinneret was changed to 6,000. To shorten the immersion time in the coagulation process, the yarn guide was set to pull the coagulated fiber bundle into air near the liquid surface at which the spinning dope solution extruded through the spinneret was introduced into the coagulation bath. Thus, popple caused on the liquid surface of the coagulation bath by increasing the number of holes of the spinneret caused adhesion among the coagulated yarns, thus resulting in not enabling a precursor fiber bundle to be obtained stably. The results are summarized in Table 2 and Table 3.

[Table 2]

| | Number of holes of spinneret | Coagulation bath temperature (°C) | Coagulation bath concentration (mass%) | Coagulated yarn tension (mg/dtex) | Rating of degree of swelling of coagulated yarn | Circularity of precursor fiber | Surface-area ratio of precursor fiber |
|---|---|---|---|---|---|---|---|
| Example 1 | 3,000 | -5 | 80 | 7.7 | A | 0.90 | 1.03 |
| Example 2 | 3,000 | -5 | 79 | 7.1 | S | 0.90 | 1.05 |
| Comparative Example 1 | 3,000 | 5 | 80 | 10.8 | C | 0.88 | 1.04 |
| Example 3 | 6,000 | -5 | 82 | 5.9 | S | 0.91 | 1.03 |
| Example 4 | 6,000 | -5 | 80 | 5.9 | S | 0.92 | 1.03 |
| Example 5 | 6,000 | -5 | 80 | 5.9 | S | 0.92 | 1.03 |
| Comparative Example 2 | 3,000 | 5 | 80 | 8.3 | B | 0.90 | 1.03 |
| Comparative Example 3 | 6,000 | 5 | 80 | - | - | - | - |

[Table 3]

| | Single-fiber diameter d (μm) | Tensile strength of resin-impregnated strands (GPa) | | Strength transition rate α (%) | Tensile modulus E of resin-impregnated strands (GPa) | Interfacial shear strength (MPa) | Single-fiber loop test | Pressure vessel |
|---|---|---|---|---|---|---|---|---|
| | | Resin formulation A | Resin formulation B | | | | E × d/W (GPa) | Pressure resistance |
| Example 1 | 6.8 | 5.7 | 4.9 | 86 | 226 | 19 | 12.6 | B |
| Example 2 | 6.7 | 5.6 | 5.0 | 89 | 225 | 18 | 12.7 | - |
| Comparative Example 1 | 6.8 | 5.5 | 4.5 | 82 | 222 | 18 | 12.1 | C |
| Example 3 | 7.0 | 5.5 | 4.9 | 89 | 224 | 18 | 12.8 | B |
| Example 4 | 6.9 | 5.7 | 5.0 | 88 | 225 | 19 | 12.7 | - |
| Example 5 | 6.9 | 5.7 | 5.2 | 91 | 225 | 14 | 12.7 | A |
| Comparative Example 2 | 6.8 | 5.6 | 4.7 | 84 | 226 | 20 | 12.5 | - |
| Comparative Example 3 | - | - | - | - | - | - | - | - |

[Preparation of carbon fiber bundle before addition of sizing agent]

A copolymer composed of acrylonitrile and itaconic acid was dissolved in dimethyl sulfoxide to produce a spinning dope solution. The spinning dope solution obtained was once extruded into air through a spinneret having holes numbering as shown in Table 3, and formed into a fiber bundle coagulated using a dry-jet wet spinning method in which the solution was introduced into a coagulation bath composed of an aqueous dimethyl sulfoxide solution controlled to have the temperature and the concentration as shown in Table 3. This fiber bundle was washed with water at 30 to 98°C using an ordinary method, and stretched. Subsequently, to this fiber bundle bathed with water and stretched, an amino-modified silicone-based silicone oil agent was added. Using a roller heated to 160°C, the resulting fiber bundle was densified under drying and adjusted to have 12,000 filaments. Then, the fiber bundle was stretched 5-fold in a pressurized steam, whereby the total stretch ratio of spinning was brought to 12 times to obtain a polyacrylonitrile-based precursor fiber bundle having a

single fiber fineness of 1.1 dtex.

Next, the polyacrylonitrile-based precursor fiber bundle obtained so as to have filaments numbering as shown in Table 3 was gathered, as required, and treated in the below-described stabilization process, pre-carbonization process, and carbonization process to be formed into a carbon fiber bundle.

In the stabilization process, the resulting polyacrylonitrile-based precursor fiber bundle was stabilized in air at a temperature of 200 to 300°C to obtain a stabilized fiber bundle.

The stabilized fiber bundle obtained in the stabilization process was pre-carbonized in a nitrogen atmosphere of the highest temperature of 800°C in the pre-carbonization process to obtain a pre-carbonized fiber bundle.

The pre-carbonized fiber bundle obtained in the pre-carbonization process was carbonized at the highest temperature of 1,300°C in a nitrogen atmosphere in the carbonization process.

Subsequently, the surface of the resulting fiber bundle underwent electrochemical treatment with an aqueous sulfuric acid solution used as an electrolyte solution. The resulting fiber bundle was washed with water, and dried to obtain a carbon fiber bundle I, carbon fiber bundle II, carbon fiber bundle III, and carbon fiber bundle IV. The details are shown in Table 4.

[Table 4]

| | Number of holes of spinneret | Coagulation bath temperature (°C) | Coagulation bath concentration (mass%) | Guide parts at outlet of coagulation bath | Coagulated yarn tension (mg/dtex) | Determination of degree of swelling of coagulated yarn | Number of filaments of carbon fiber bundle (filaments) |
|---|---|---|---|---|---|---|---|
| Carbon fiber bundle I | 3,000 | 3 | 35 | Fixing guide parts | 13.0 | C | 12,000 |
| Carbon fiber bundle II | 6,000 | -5 | 80 | Free roller | 5.9 | S | 12,000 |
| Carbon fiber bundle III | 3,000 | 3 | 35 | Fixing guide parts | 13.0 | C | 24,000 |
| Carbon fiber bundle IV | 6,000 | -5 | 80 | Free roller | 5.9 | S | 24,000 |

[Examples 6 to 15, Comparative Examples 4 and 5, and Reference Examples 1 to 25]

As shown in Table 5, a sizing agent i, sizing agent ii, sizing agent iii, or sizing agent iv was added to the carbon fiber bundle I, carbon fiber bundle II, carbon fiber bundle III, or carbon fiber bundle IV. Then, the resulting carbon fiber bundle was heat-treated at a temperature of 210°C for 75 seconds to obtain a carbon fiber bundle having a sizing agent added thereto (however, Reference Example 1 had no sizing agent added thereto).

Next, a mixture (mixture C) of "Araldite (registered trademark)" LY1564 SP CI and "Baxxodur (registered trademark)" EC331 mixed at 100:35 (parts by mass) was prepared.

On a filament winding molding device, a 7.5 L polyethylene-made liner was disposed. To the liner, the yarn bundle of the carbon fiber bundle having the sizing added thereto was fed while the yarn bundle was impregnated with the mixture C preliminarily mixed uniformly at 25°C, in such a manner that the amount of the mixture C added with respect to the total mass of the carbon fiber bundle and the mixture C was 22 to 28 mass%. A first layer, which was composed of a hoop layer at an angle of +89° with the axial direction of the liner and a hoop layer at an angle of -89° with the axial direction of the liner, was wound so as to have a thickness of 1.4 mm. Next, a second layer, which was composed of a helical layer at an angle of +20° with the axial direction of the liner and a helical layer at an angle of -20° with the axial direction of the liner, was wound so as to have a thickness of 2.2 mm. Furthermore, a third layer, which was composed of a hoop layer at an angle of +89° with the axial direction of the liner and a hoop layer at an angle of -89° with the axial direction of the liner, was wound so as to have a thickness of 0.6 mm, whereby an intermediate was obtained. After the carbon fiber bundle was wound up, the

intermediate, being rotated, was retained in an environment of 20°C for 15 minutes at a speed of 7 rpm. The intermediate was heated at a temperature of 80°C for 120 minutes and subsequently at a temperature of 110°C for 240 minutes to cure the mixture C and obtain a pressure vessel for a pressure test.

The details are summarized in Table 5. In this regard, an epoxy value was not measured in Reference Example 1 in which no sizing agent was added or in Examples 11 and 15 and Reference Examples 17 and 25 in each of which a sizing agent iv containing no epoxy group was used. In Reference Example 1 in which no sizing agent was added, the tensile strength A' of resin-impregnated strands was 5.1 GPa, which was a low strength, compared with the level of the carbon fiber bundle I having a sizing agent added thereto. This is because of fuzzing and disordered alignment that were caused when the tensile strength of resin-impregnated strands was measured. In Reference Examples 2, 5, and 8 in which the interfacial shear strength was controlled by decreasing the ratio of attachment of a sizing agent, compared with the ratio in Reference Example 11, the tensile strength C' of resin-impregnated strands was enhanced, and in Reference Example 8, the pressure resistance of the pressure vessel was found to be enhanced, compared with Reference Example 11. In particular, in Reference Example 8 that satisfied Formula 1, the processability was found to be improved, compared with Reference Example 11. In Reference Examples 12 and 13 in which the interfacial shear strength was controlled by decreasing the epoxy value of a sizing agent used, compared with the epoxy value in Reference Example 11, the tensile strength C' of resin-impregnated strands was enhanced, and in Reference Example 13, the pressure resistance of the pressure vessel was found to be enhanced, compared with Reference Example 11. In addition, in Reference Examples 12 and 13 that satisfied Formula 1, the processability was found to be improved, compared with Reference Example 11.

For each of the carbon fiber bundles II and IV, compared with the carbon fiber bundles I and III, the spinning conditions were changed in such a manner that the degree of swelling of the coagulated yarn during the spinning of a precursor fiber bundle for carbon fiber was in a more preferable range. In Examples 6 to 11 in which the carbon fiber bundle II was used, the tensile strength C' of resin-impregnated strands was enhanced, compared with Reference Examples 1 to 17 in which the carbon fiber bundle I was used. For example, in Example 7, compared with Reference Example 8, both the tensile strength C' of resin-impregnated strands and the pressure resistance of the pressure vessel were enhanced, although, in both the Example and the Reference Example, the sizing agent i was used, and the ratio of attachment of the sizing agent was the same. In addition, both the tensile strength C' of resin-impregnated strands and the pressure resistance of the pressure vessel were enhanced in Examples 7, 10, and 11 in which the interfacial shear strength was controlled by further changing the ratio of attachment of the sizing agent or the epoxy value, compared with the ratio or the epoxy value in Example 9 in which the carbon fiber bundle II having the degree of swelling of the coagulated yarn in a preferable range was used. Suitably controlling both the degree of swelling of the coagulated yarn and the interfacial shear strength resulted in obtaining a carbon fiber bundle particularly preferable for applications for a pressure vessel. In a case where Comparative Example 4 is compared with Examples 7, 9, 10, and 11, Comparative Example 4 was as follows: the tensile strength A' of resin-impregnated strands was 5.7 GPa, which was not smaller than in Example 7, 9, 10, and 11; but the ratio of attachment of the Sz agent was larger, and thus, Formula 1 was not satisfied; and the interfacial shear strength was high, and thus, the tensile strength B' of resin-impregnated strands or the tensile strength C' of resin-impregnated strands was low; with the result that the pressure resistance of the pressure vessel was also a low value. On the basis of this fact, it can be said that the tensile strength A' of resin-impregnated strands does not necessarily reflect the pressure resistance of a pressure vessel, and that, to enhance the pressure resistance of a pressure vessel, it is important to suitably control one or both of the degree of swelling of the coagulated yarn and the interfacial shear strength to thereby enhance the tensile strength B' of resin-impregnated strands or the tensile strength C' of resin-impregnated strands.

[Table 5]

| | Carbon fiber bundle | Sizing agent | Carbon fiber bundle with sizing agent | | | | | | | | | | | | | | Pressure vessel |
|---|---|---|---|---|---|---|---|---|---|---|---|---|---|---|---|---|---|
| | | | Tensile strength A' of resinimpregnated strands (GPa) | Tensile strength B' of resin-impregnated strands (GPa) | Strength transition rate α (%) | Tensile strength C' of resin-impregnated strands (GPa) | Strength transition rate β (%) | Tensile modulus E of resin-impregnated strands (GPa) | Single-fiber diameter d (μm) | Epoxy value X of sizing agent (meq./g) | Ratio Y of adhesion of sizing agent (mass% ) | X × Y | Interfacial shear strength (MPa) | Single-fiber loop test E × d/W (GPa) | Processability | Drape value (cm) | Pressure resistance |
| Reference Example 1 | I | - | 5.1 | - | - | - | - | | 6.8 | - | - | - | 9 | - | C | - | - |
| Reference Example 2 | | i | 5.5 | - | - | 5.0 | 91 | - | 6.8 | 0.7 | 0.12 | 0.08 | 10 | - | C | 13 | - |
| Reference Example 3 | | ii | 5.4 | - | - | 5.1 | 94 | - | 6.8 | 0.6 | 0.11 | 0.07 | 9 | - | C | 12 | - |
| Reference Example 4 | | iii | 5.5 | - | - | 5.2 | 95 | - | 6.9 | 0.4 | 0.11 | 0.04 | 10 | - | C | 12 | - |
| Reference Example 5 | | i | 5.4 | - | - | 4.9 | 91 | - | 6.8 | 0.7 | 0.31 | 0.22 | 14 | - | B | 15 | - |
| Reference Example 6 | | ii | 5.5 | - | - | 5.0 | 91 | - | 6.8 | 0.6 | 0.33 | 0.20 | 13 | - | B | 15 | - |
| Reference Example 7 | | iii | 5.4 | - | - | 5.2 | 96 | - | 6.9 | 0.4 | 0.28 | 0.11 | 12 | - | B | 14 | - |
| Reference Example 8 | | i | 5.5 | - | - | 4.9 | 89 | - | 6.9 | 0.7 | 0.49 | 0.34 | 15 | - | A | 16 | B |
| Reference Example 9 | | ii | 5.5 | - | - | 4.9 | 89 | - | 6.8 | 0.6 | 0.51 | 0.31 | 14 | - | A | 15 | - |
| Reference Example 10 | | iii | 5.5 | - | - | 5.0 | 91 | - | 6.8 | 0.4 | 0.50 | 0.20 | 14 | - | A | 15 | - |

(continued)

| | Carbon fiber bundle | Sizing agent | Carbon fiber bundle with sizing agent | | | | | | | | | | | | | | Pressure vessel |
|---|---|---|---|---|---|---|---|---|---|---|---|---|---|---|---|---|---|
| | | | Tensile strength A' of resinimpregnated strands (GPa) | Tensile strength B' of resin-impregnated strands (GPa) | Strength transition rate α (%) | Tensile strength C' of resin-impregnated strands (GPa) | Strength transition rate β (%) | Tensile modulus E of resin-impregnated strands (GPa) | Single-fiber diameter d (μm) | Epoxy value X of sizing agent (meq./g) | Ratio Y of adhesion of sizing agent (mass% ) | X × Y | Interfacial shear strength (MPa) | Single-fiber loop test E × d/W (GPa) | Processability | Drape value (cm) | Pressure resistance |
| Reference Example 11 | | i | 5.4 | - | - | 4.5 | 83 | - | 6.8 | 0.7 | 1.00 | 0.70 | 17 | - | B | 19 | C |
| Reference Example 12 | | ii | 5.4 | - | - | 4.8 | 89 | - | 6.8 | 0.6 | 1.01 | 0.61 | 16 | - | A | 17 | - |
| Reference Example 13 | | iii | 5.5 | - | - | 5.0 | 91 | - | 6.8 | 0.4 | 0.98 | 0.39 | 15 | - | A | 16 | A |
| Reference Example 14 | | i | 5.4 | - | - | 4.4 | 81 | - | 6.9 | 0.7 | 1.68 | 1.18 | 19 | - | C | 21 | - |
| Reference Example 15 | | ii | 5.5 | - | - | 4.6 | 84 | - | 6.8 | 0.6 | 1.72 | 1.03 | 19 | - | B | 20 | - |
| Reference Example 16 | | iii | 5.4 | - | - | 4.8 | 89 | - | 6.8 | 0.4 | 1.70 | 0.68 | 16 | - | B | 18 | - |
| Reference Example 17 | | iv | 5.5 | - | - | 5.1 | 93 | - | 6.9 | - | 0.20 | - | 15 | - | A | 8 | A |
| Example 6 | II | i | 5.6 | 5.1 | 91 | 5.2 | 93 | 224 | 7.0 | 0.7 | 0.29 | 0.20 | 12 | 12.6 | B | 16 | - |
| Example 7 | | i | 5.7 | 5.2 | 91 | 5.1 | 89 | 224 | 6.9 | 0.7 | 0.52 | 0.36 | 16 | 12.7 | A | 17 | A |
| Example 8 | | iii | 5.7 | 5.2 | 91 | 5.2 | 91 | 225 | 6.8 | 0.4 | 0.54 | 0.22 | 14 | 12.6 | A | 15 | - |
| Example 9 | | i | 5.6 | 4.8 | 86 | 4.7 | 84 | 223 | 6.8 | 0.7 | 0.99 | 0.69 | 17 | 12.6 | B | 20 | B |
| Example 10 | | iii | 5.7 | 5.2 | 91 | 5.2 | 91 | 225 | 6.9 | 0.4 | 0.97 | 0.39 | 14 | 12.7 | A | 16 | A |
| Comparative Example 4 | | i | 5.7 | 4.6 | 81 | 4.6 | 81 | 224 | 6.9 | 0.7 | 1.71 | 1.20 | 20 | 12.6 | C | 21 | C |
| Example 11 | | iv | 5.6 | 5.2 | 93 | 5.2 | 93 | 223 | 7.0 | - | 0.18 | - | 14 | 12.6 | A | 7 | A |

(continued)

| | Carbon fiber bundle | Sizing agent | Carbon fiber bundle with sizing agent | | | | | | | | | | | | | | Pressure vessel |
|---|---|---|---|---|---|---|---|---|---|---|---|---|---|---|---|---|---|
| | | | Tensile strength A' of resinimpregnated strands (GPa) | Tensile strength B' of resin-impregnated strands (GPa) | Strength transition rate α (%) | Tensile strength C' of resin-impregnated strands (GPa) | Strength transition rate β (%) | Tensile modulus E of resin-impregnated strands (GPa) | Single-fiber diameter d (μm) | Epoxy value X of sizing agent (meq./g) | Ratio Y of adhesion of sizing agent (mass%) | X × Y | Interfacial shear strength (MPa) | Single-fiber loop test E × d/W (GPa) | Processability | Drape value (cm) | Pressure resistance |
| Reference Example 18 | III | i | 5.5 | - | - | 4.9 | 89 | - | 6.8 | 0.7 | 0.30 | 0.21 | 13 | - | B | 17 | - |
| Reference Example 19 | | iii | 5.5 | - | - | 5.2 | 95 | - | 6.9 | 0.4 | 0.31 | 0.12 | 12 | - | B | 16 | - |
| Reference Example 20 | | i | 5.6 | - | - | 4.9 | 88 | - | 6.9 | 0.7 | 0.50 | 0.35 | 15 | - | A | 18 | - |
| Reference Example 21 | | iii | 5.5 | - | - | 5.0 | 91 | - | 6.8 | 0.4 | 0.48 | 0.19 | 14 | - | A | 17 | - |
| Reference Example 22 | | i | 5.4 | - | - | 4.4 | 81 | - | 6.9 | 0.7 | 0.99 | 0.69 | 17 | - | B | 23 | - |
| Reference Example 23 | | iii | 5.5 | - | - | 5.0 | 91 | - | 6.8 | 0.4 | 0.98 | 0.39 | 16 | - | A | 18 | - |
| Reference Example 24 | | i | 5.6 | - | - | 4.3 | 77 | - | 7.0 | 0.7 | 1.74 | 1.22 | 19 | - | C | 24 | - |
| Reference Example 25 | | iv | 5.5 | - | - | 5.0 | 91 | - | 7.0 | - | 0.22 | - | 15 | - | A | 10 | - |
| Example 12 | IV | i | 5.7 | 5.0 | 88 | 5.0 | 88 | 225 | 6.9 | 0.7 | 0.53 | 0.37 | 15 | 12.7 | A | 18 | - |
| Example 13 | | iii | 5.6 | 5.1 | 91 | 5.2 | 93 | 224 | 6.9 | 0.4 | 0.54 | 0.22 | 14 | 12.6 | A | 17 | - |
| Comparative Example 5 | | i | 5.6 | 4.7 | 84 | 4.6 | 82 | 223 | 6.8 | 0.7 | 1.03 | 0.72 | 17 | 12.6 | B | 22 | - |
| Example 14 | | iii | 5.7 | 5.2 | 91 | 5.2 | 91 | 224 | 6.9 | 0.4 | 0.95 | 0.38 | 15 | 12.6 | A | 19 | - |
| Example 15 | | iv | 5.6 | 5.2 | 93 | 5.1 | 91 | 224 | 6.8 | - | 0.18 | - | 14 | 12.7 | A | 10 | - |

[Examples 16 and 17 and Reference Examples 26 and 27]

A carbon fiber bundle in each of Example 9, Comparative Example 5, Reference Example 11, and Reference Example 22 was stored in a constant-temperature and constant-humidity environment of 60°C and a relative humidity of 90% for 200 hours to thereby undergo an aging treatment. Thus, a carbon fiber bundle in each of Examples 16 and 17 and Reference Examples 26 and 27 corresponding to the former Examples, Comparative Examples, and Reference Examples respectively was obtained. Then, a pressure vessel for a pressure test was obtained using the same method as in the respectively corresponding Example 9, Comparative Example 5, Reference Example 11, and Reference Example 22. The details are summarized in Table 6. The tensile strength A' of resin-impregnated strands was not found to be changed between before and after the aging treatment. On the other hand, a decrease caused in the epoxy value by the aging treatment allowed Examples 16 and 17 and Reference Examples 26 and 27 to satisfy Formula 1, and to exhibit an enhancement of the tensile strength C' of resin-impregnated strands, compared with the tensile strength before the aging treatment. In addition, on the basis of the comparison between Example 9 and Example 16 or between Reference Examples 11 and 26, the pressure resistance of the pressure vessel was found to be enhanced.

[Table 6]

| | | Carbon fiber bundle with sizing agent, after aging treatment | | | | | | | | | | | | | | Pressure vessel |
|---|---|---|---|---|---|---|---|---|---|---|---|---|---|---|---|---|
| | Carbon fiber bundle with sizing agent, before aging treatment | Tensile strength A' of resin-impregnated strands (GPa) | Tensile strength B' of resin-impregnated strands (GPa) | Strength transition rate α (%) | Tensile strength C' of resin-impregnated strands (GPa) | Strength transition rate β (%) | Tensile modulus E of resin-impregnated strands (GPa) | Single-fiber diameter d (μm) | Epoxy value X of sizing agent (meq./g) | Ratio Y of adhesion of sizing agent (mass%) | X × Y | IFSS (MPa) | Processability | Single-fiber loop test E × d/W (GPa) | Drape value (cm) | Pressure resistance |
| Reference Example 26 | Reference Example 11 | 5.4 | - | - | 5.0 | 93 | - | 6.8 | 0.38 | 1.00 | 0.38 | 14 | B | - | 15 | A |
| Example 16 | Example 9 | 5.6 | 5.2 | 93 | 5.2 | 93 | 223 | 6.8 | 0.38 | 0.99 | 0.38 | 14 | B | 12.6 | 16 | A |
| Reference Example 27 | Reference Example 22 | 5.4 | - | - | 4.9 | 91 | - | 6.9 | 0.38 | 0.99 | 0.38 | 15 | B | - | 19 | - |
| Example 17 | Comparat ive Example 5 | 5.6 | 5.2 | 93 | 5.1 | 91 | 223 | 6.8 | 0.38 | 1.03 | 0.39 | 14 | B | 12.6 | 18 | - |

The tensile strength of resin-impregnated strands (the tensile strength D' of resin-impregnated strands) of a carbon fiber bundle in each of Examples 1, 3, 5, 7, 9, 10, 11, and 16, Comparative Examples 1 and 4, and Reference Examples 8, 11, 13, 17, and 26 was evaluated in accordance with JIS R7608 (2007) using Resin Formulation D described below. In this regard, Resin Formulation D was heated to 60°C during impregnation. The details are shown in Table 7. Resin Formulation D is a practical resin for a towpreg in the same manner as Resin Formulation B. In the same manner as use of the resin composition B or the resin composition C, use of the resin composition D allowed a carbon fiber bundle according to the present invention to transit a higher tensile strength D' of resin-impregnated strands than a carbon fiber bundle in Comparative Examples. In addition, it has been recognized that the higher the tensile strength D' of resin-impregnated strands was, the better the pressure resistance of a pressure vessel produced using the resin composition B or the resin composition C in each of Examples, Comparative Examples, and Reference Examples tended to be.

Resin Formulation D: "jER (registered trademark)" 828, *N,N*-diglycidylanilin, dicyandiamide, and 3-(3,4-dichlorophenyl)-1,1-dimethylurea are used at a ratio of 60:40:7.6:2 (parts by mass), and the curing conditions of a normal pressure, a temperature of 130°C, and a time of 90 minutes are used.

[Table 7]

| | Carbon fiber bundle with sizing agent | | | | Pressure vessel |
|---|---|---|---|---|---|
| | Tensile strength A' of resin-impregnated strands (GPa) | Tensile strength B' of resin-impregnated strands (GPa) | Tensile strength C' of resin-impregnated strands (GPa) | Tensile strength D' of resin-impregnated strands (GPa) | Pressure resistance |
| Example 1 | 5.7 | 4.9 | - | 5.1 | B |
| Comparative Example 1 | 5.5 | 4.5 | - | 4.7 | C |
| Example 3 | 5.5 | 4.9 | - | 5.1 | B |
| Example 5 | 5.7 | 5.2 | - | 5.4 | A |
| Reference Example 8 | 5.5 | - | 4.9 | 5.1 | B |
| Reference Example 11 | 5.4 | - | 4.5 | 4.8 | C |
| Reference Example 13 | 5.5 | - | 5.0 | 5.2 | A |
| Reference Example 17 | 5.5 | - | 5.1 | 5.4 | A |
| Example 7 | 5.7 | 5.2 | 5.1 | 5.4 | A |
| Example 9 | 5.6 | 4.8 | 4.7 | 5.0 | B |
| Example 10 | 5.7 | 5.2 | 5.2 | 5.4 | A |
| Comparative Example 4 | 5.7 | 4.6 | 4.6 | 4.8 | C |
| Example 11 | 5.6 | 5.2 | 5.2 | 5.5 | A |
| Reference Example 26 | 5.4 | - | 5.0 | 5.3 | A |
| Example 16 | 5.6 | 5.2 | 5.2 | 5.4 | A |

Reference Signs List

1: Fixing bar
2: Carbon fiber bundle

3: Weight
4: Horizontal table
5: Factory air-pressure line
6: Booster
7: Hydraulic pump
8: Liquid-transfer hose
9: Fixing mechanism
10: Safety cover
11: Pressure vessel
12: Data logger

## Claims

1. A carbon fiber bundle comprising a sizing agent added thereto, wherein the tensile strength of resin-impregnated strands (tensile strength A' of resin-impregnated strands) of the carbon fiber bundle is 5.0 GPa or more and 6.0 GPa or less, as evaluated on the basis of JIS R7608 (2007) using Resin Formulation A below; wherein the tensile strength of resin-impregnated strands (tensile strength B' of resin-impregnated strands) of the carbon fiber bundle is 4.7 GPa or more and 5.5 GPa or less, as evaluated on the basis of JIS R7608 (2007) using Resin Formulation B below; wherein the ratio of the tensile strength B' of resin-impregnated strands to the tensile strength A' of resin-impregnated strands is 85% or more; and wherein the single-fiber diameter of the carbon fiber bundle is 6.0 μm or more;

   Resin Formulation A: "CELLOXIDE (registered trademark)" 2021P, boron trifluoride monoethyl amine, and acetone are used at a ratio of 100:3:4 (parts by mass), and the curing conditions of a normal pressure, a temperature of 125°C, and a time of 30 minutes are used; and
   Resin Formulation B: "JER (registered trademark)" 828, dicyandiamide, and 3-(3,4-dichlorophenyl)-1,1-dimethylurea are used at a ratio of 100:6.3:2 (parts by mass), and the curing conditions of a normal pressure, a temperature of 130°C, and a time of 90 minutes are used.

2. The carbon fiber bundle according to claim 1, wherein the product E × d/W is 12.6 GPa or more, wherein E represents the tensile modulus of resin-impregnated strands, and d/W represents the ratio of a single-fiber diameter d to a loop diameter W just before loop fracture, as evaluated by a single-fiber loop test.

3. The carbon fiber bundle according to claim 1 or 2, comprising a single fiber the surface-area ratio of which is 1.00 to 1.08.

4. The carbon fiber bundle according to any one of claim 1 or 2, wherein the tensile strength of resin-impregnated strands (tensile strength C' of resin-impregnated strands) of the carbon fiber bundle is 4.8 GPa or more and 5.5 GPa or less, as evaluated on the basis of JIS R7608 (2007) using Resin Formulation C below; wherein the ratio of the tensile strength C' of resin-impregnated strands to the tensile strength A' of resin-impregnated strands is 85% or more;

   wherein the single-fiber diameter of the carbon fiber bundle is 6.6 μm or more; and wherein the interfacial shear strength of the carbon fiber bundle is 16 MPa or less;
   Resin Formulation C: "Araldite (registered trademark)" LY1564 SP CI and "Baxxodur (registered trademark)" EC331 are used at a ratio of 100:35 (parts by mass), the curing conditions of a normal pressure, a temperature of 80°C, and a time of 120 minutes are used, and then, the curing conditions of a normal pressure, a temperature of 110°C, and a time of 240 minutes are used.

5. The carbon fiber bundle according to claim 4, wherein the tensile strength C' of resin-impregnated strands is 5.0 GPa or more and 5.5 GPa or less.

6. The carbon fiber bundle according to claim 4, wherein the sizing agent contains at least one component containing an epoxy group, and wherein the carbon fiber bundle satisfies the relation of the following Formula 1: wherein the epoxy value of the sizing agent eluted by immersing the carbon fiber bundle in *N*,*N*-dimethylformamide and ultrasonicating the carbon fiber bundle is X meq./g, and wherein the ratio of attachment of the sizing agent added to the carbon fiber bundle is Y mass%.

$$0.10\ \text{meq./g} \leq X \times Y \leq 0.68\ \text{meq./g} \ldots \text{Formula 1}$$

**7.** The carbon fiber bundle according to claim 4, having a drape value of more than 0 cm and 18 cm or less.

**8.** The carbon fiber bundle according to claim 7, having a drape value of 4 cm or more and 10 cm or less.

**9.** A carbon fiber-reinforced composite produced using the carbon fiber bundle according to claim 1 or 2.

**10.** A pressure vessel produced using the carbon fiber bundle according to claim 1 or 2.

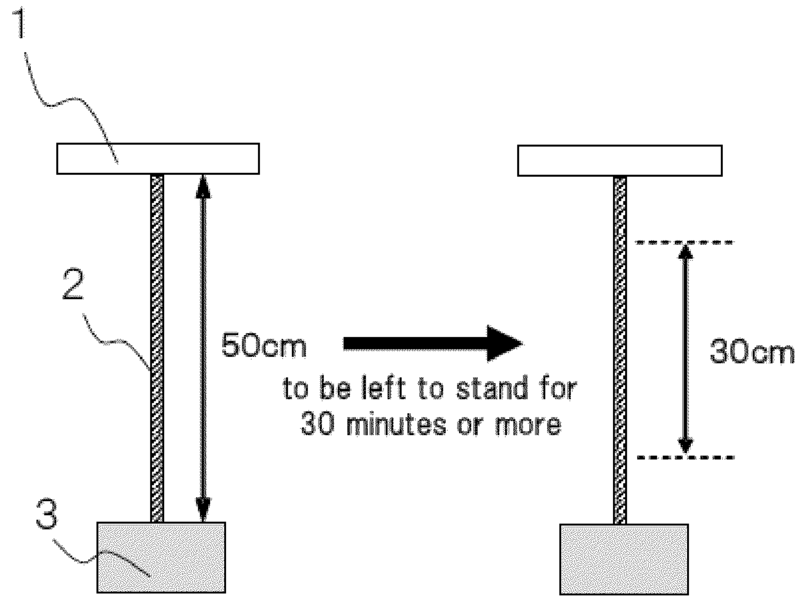
1
2
50cm
to be left to stand for
30 minutes or more
30cm
3

FIG. 1

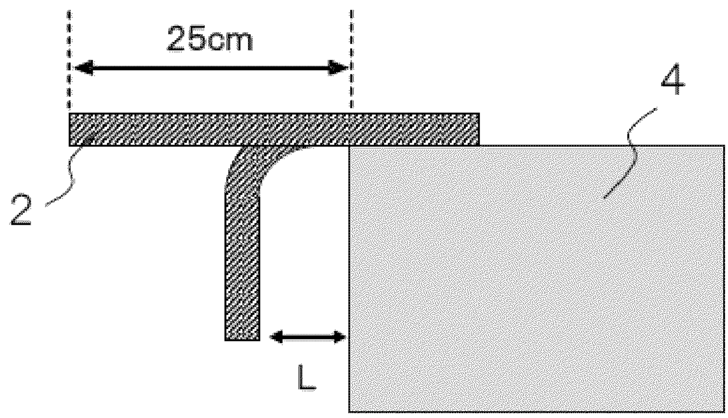
25cm
4
2
L

FIG. 2

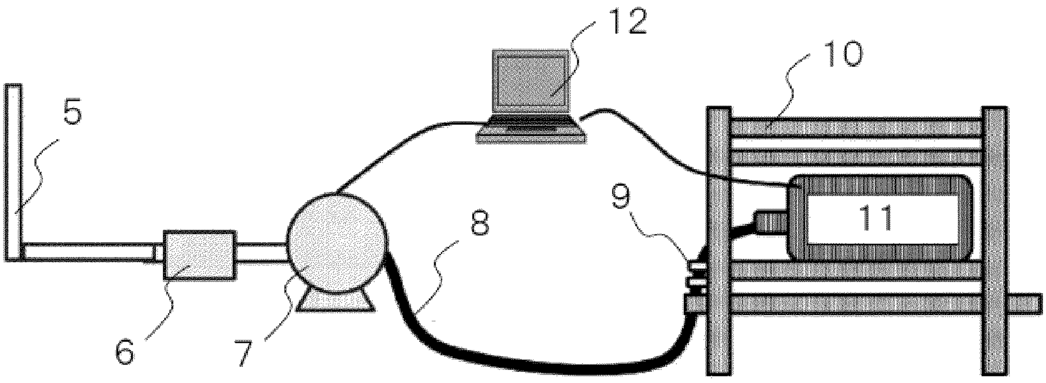


FIG. 3

## INTERNATIONAL SEARCH REPORT

International application No.
**PCT/JP2023/036704**

**A. CLASSIFICATION OF SUBJECT MATTER**

***D01F 9/22***(2006.01)i; ***B29B 15/14***(2006.01)i; ***D06M 15/55***(2006.01)i; *D06M 101/40*(2006.01)n
FI: D01F9/22; B29B15/14; D06M15/55; D06M101:40

According to International Patent Classification (IPC) or to both national classification and IPC

**B. FIELDS SEARCHED**

Minimum documentation searched (classification system followed by classification symbols)

D01F9/08-9/32; B29B11/16; B29B15/08-15/14; C08J5/04-5/10; C08J5/24; D06M13/00-15/715; D01F6/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2018-508667 A (CYTEC INDUSTRIES INC.) 29 March 2018 (2018-03-29) examples, runs 4-6, paragraphs [0003], [0011] | 1-10 |
| Y | JP 2004-238761 A (TORAY IND., INC.) 26 August 2004 (2004-08-26) claims | 1-10 |
| Y | JP 2014-181418 A (TORAY IND., INC.) 29 September 2014 (2014-09-29) claims, example 4 | 1-10 |
| Y | JP 2015-7300 A (TORAY IND., INC.) 15 January 2015 (2015-01-15) claims, paragraph [0096] | 7, 8 |
| A | WO 2010/143680 A1 (MITSUBISHI RAYON CO., LTD.) 16 December 2010 (2010-12-16) example 6 | 1-10 |
| A | WO 2018/047692 A1 (TORAY IND., INC.) 15 March 2018 (2018-03-15) claims, examples | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 December 2023** | **19 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/036704**

| Patent document cited in search report | Publication date (day/month/year) | Patent family member(s) | Publication date (day/month/year) |
|---|---|---|---|
| JP 2018-508667 A | 29 March 2018 | WO 2016/144488 A1<br>examples, runs 4-6, paragraphs [0002], [0010]<br>JP 2021-4437 A<br>US 2016/0263803 A1<br>US 2017/0362742 A1<br>EP 3268516 A1<br>CA 2979199 A<br>KR 10-2017-0122785 A<br>CN 107429431 A<br>BR 112017019080 A | |
| JP 2004-238761 A | 26 August 2004 | (Family: none) | |
| JP 2014-181418 A | 29 September 2014 | (Family: none) | |
| JP 2015-7300 A | 15 January 2015 | (Family: none) | |
| WO 2010/143680 A1 | 16 December 2010 | EP 2441865 A1<br>example 6<br>US 2012/0088104 A1<br>US 2019/0233975 A1<br>CA 2764661 A<br>CN 102459722 A<br>KR 10-2012-0023181 A<br>TW 201114960 A<br>CA 2820810 A<br>CA 2820976 A | |
| WO 2018/047692 A1 | 15 March 2018 | EP 3511450 A1<br>claims, examples<br>US 2019/0194829 A1<br>KR 10-2019-0044588 A<br>CN 109689950 A<br>TW 201819699 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H05004463 B
- JP H04009227 B
- JP 3047731 B
- JP 2001323046 A
- WO 201667736 A
- JP 2003277471 A
- JP 6543309 B
- JP 2020059937 A
- JP 4533518 B
- JP 2002294568 A
- JP 7239401 B
- JP 6051987 B